# FASCICULE DE BREVET EUROPEEN

(11) **EP 1 064 801 B1**
(45) Date de publication et mention de la délivrance du brevet: **23.04.2003**
(21) Numéro de dépôt: 99911534.8
(22) Date de dépôt: 26.03.1999
(51) Int. Cl.: H04Q 7/22

(54) **SYSTEME DE COMMUNICATION DE DONNEES SUR LES RESEAUX RADIOMOBILES PUBLICS**
DATAKOMMUNIKATIONSSYSTEME AUF ÖFFENTLICHEN MOBILFUNKNETZWERKEN
DATA COMMUNICATION SYSTEM ON PUBLIC MOBILE RADIO NETWORKS

(30) Priorité: 26.03.1998 IT FI980072
(43) Date de publication de la demande: 03.01.2001
(73) Titulaire: Riquier, Huguette, 50127 Firenze (IT); E.T.S. S.R.L., 50129 Firenze (IT)
(72) Inventeur: CORSI, Paolo, I-50127 Firenze (IT)
(74) Mandataire: Colens, Alain
(86) Numéro de dépôt international: BE9900042
(87) Numéro de publication internationale: WO99052303

(56) Documents cités:
- EP-A- 0 565 229
- WO-A-95/03679

## Description

### 1. CHAMP D'APPLICATION DU SYSTEME

L'objet de la présente invention est un système de communication de données sur les réseaux radiomobiles publics, par exemple GSM, qui implémente un service de données adressé aux usagers professionnels (business users) avec valeur ajoutée à la radiotéléphonie.

La caractéristique du système est la généralité, consentant l'intégration d'un personal computer portatif (lap top PC) relié au terminal radiomobile avec les architectures de réseau pour les systèmes informatiques aussi bien centralisés, par exemple ceux d'IBM et de Bull, que distribués , par exemple ceux sur les architectures TCP/IP (accès internet) et client-server, comme aussi avec les architectures de réseau pour les systèmes de poste électronique (electronic mail).

Les architectures de réseau peuvent être constituées aussi bien sur des réseaux d'aire locale (LAN, Local Area Networks) que sur des réseaux d'aire géographique, WAN (Wide Area Networks).

Le système garantit la continuité du service, consistant dans la permanence des sessions établies sur les architectures de réseau par le même système, avec la condition qu'aucune donnée ne reste mémorisée dans aucun lieu compris entre les mêmes architectures de réseau et le PC portatif dans les cas suivants :
1) dans le changement de cellule sur le réseau radiomobile;
2) durant la mise hors de service du PC portatif ou du terminal radiomobile;
3) dans la commutation d'une session à une autre (commutation manuelle).

La continuité du service est aussi garantie sans la condition susdite dans le cas de la commutation d'une session à la radiotéléphonie et successive commutation de retour de la radiotéléphonie à la session (commutations automatiques).

La déconnexion et la connexion du PC portatif de/à l'appareil radiomobile sont égalisés respectivement à la mise hors de service et à la mise en service du même PC portatif; pareillement égalisés à la mise hors de service et à la mise en service du PC portatif sont respectivement la clôture et l'ouverture dans le même PC portatif du processus d'élaboration du module software indiqué en avant.

Dans le cas des systèmes informatiques centralisés le système consent les sessions pour les services du type élaboration électronique des données, EDP (Electronic Data Processing) et exclut les sessions pour les services du type automation d'office, OA (Office Automation).
Dans le cas des systèmes informatiques distribués, désignés les deux extrêmes de la session avec les termes de demandeur du service (service requestor) et de fournisseur du service (service supplier), le système représente l'extrême demandeur du service.

Le système est formé d'une série d'éléments, quelques-uns internes et d'autres externes à l'infrastructure , constituée par le réseau radiomobile et le réseau de données , à commutation de paquets ou frame relay, entre eux interconnectés; les éléments extrêmes de la série sont représentés par le PC portatif et par un serveur de communication dans les locaux de l'usager qui consent d'interfacer le système aux architectures de réseau pour les systèmes informatiques.

Chaque élément du système est défini par les procédures qu'il développe et par les interactions avec les autres éléments, consenties par des informations appropriées de contrôle désignées signalisations; ces interactions permettent de coordonner entre elles les procédures développées par les éléments du système, en les finalisant à la transmission correcte des données entre le PC portatif et les sessions établies sur les architectures de réseau.

L'ensemble des signalisations et des données échangées entre deux éléments du système constitue l'interface entre ces deux éléments.

Dans le but du brevet, le système est établi sur la base de la description des procédures développées par les éléments qui le constituent et par la description des interfaces entre ces mêmes éléments ; procédures et interfaces qui sont définies avec référence à l'intégration avec les systèmes informatiques centralisés avec accès basés sur concentrateur (IBM), parce que l'intégration avec les autres systèmes informatiques, aussi bien centralisés avec accès basé sur multiplateur (Bull) que distribués (TCP/IP, client-server) constitue un cas particulier de l'intégration susdite.

L'état de la technique peut être illustré par l'exemple de deux demandes de brevet: EP-A-0 565 229 et WO 9503679. La demande de brevet EP-A-0 565 229 établit entre le PC portatif et le terminal radiomobile (constitué par le radiotéléphone et par le modem) une interface de contrôle adjointe à l'interface de données entre ces mêmes unités, qui consent de contrôler sur le PC portatif la qualité de la transmission sur les canaux radio utilisés pour le service de données; la présente invention se réfère par contre à la susdite interface de données entre le PC portatif et le terminal radiomobile.

La demande de brevet WO 9503679 définit une méthode qui consent d'utiliser pour le service de données les mêmes canaux radio assignés au service radiotéléphonique, gérés selon la technique de transmission à commutation de circuit; la présente invention se réfère par contre aux réseaux radiomobiles avec canaux radio assignés au service de données gérés selon la technique de transmission à commutation de paquets et distincts de ceux assignés au service radiotéléphonique.

La présente invention assume comme point de départ les systèmes qui adoptent sur le parcours radiomobile la technique de transmission à commutation de paquets en manière conventionnelle dans le sens que sur ce parcours ils font correspondre une liaison logique à chaque session établie sur les architectures de réseau pour les systèmes informatiques, de façon que ces liaisons logiques constituent le prolongement de celles établies sur le réseau de données fixe et correspondantes aux mêmes sessions.

Ces systèmes, illustrés dans le cas du réseau GSM par l'exemple de l'implémentation conventionnelle du GPRS- general packet radio system, présentent les problèmes exposés au chapitre 2 en ce qui concerne la permanence des sessions établies avec les systèmes informatiques centralisés avec accès basé sur concentrateur, aussi bien dans le cas où ces sessions sont établies - pour le système informatique d'IBM- au moyen de l'architecture de réseau APPN- advanced peer to peer networking-que dans le cas où les systèmes informatiques en question sont rejoints au travers des architectures de réseau pour les systèmes informatiques distribués comme l'architecture client-server de Microsoft.

Ces systèmes ne rendent pas l'opérateur conscient du permis donné au système informatique d'effectuer les transmissions des flux de données outbound dans le cas des flux de données outbound non sollicités prévus par les systèmes informatiques centralisés avec accès basé sur concentrateur.

Ces systèmes ne consentent donc pas le recouvrement des transmissions des flux de données outbound non sollicités interrompues quand échoue la connexion avec le serveur de communication, au moyen d'une nouvelle connexion effectuée par l'opérateur pour conditionner le même serveur de communication à reprendre la transmission interrompue utilisant une mémorisation à temps déterminé des flux de données outbound des systèmes informatiques, si le même opérateur, ignorant ces transmissions, exécute la nouvelle connexion quand le temps de mémorisation est terminé.

Pour éliminer les susdits problèmes, le système objet de la présente invention applique la technique de transmission à commutation de paquets en manière non conventionnelle, comme décrit au chapitre 8 en ce qui concerne les liaisons logiques de la version transparente au réseau de données; la version non transparente au réseau de données, décrite au chapitre 3, est utilisée seulement pour spécifier les procédures développées par les éléments qui constituent le système et les interfaces entre ces mêmes éléments.

### 2. PROBLEMES PRÉSENTÉS PAR LA TECHNIQUE CONVENTIONNELLE

Pour atteindre la permanence des sessions établies sur les architectures de réseau, le système détermine dans le flux de données qui se déroule sur chaque session les unités de travail constituées chacune par la série des transmissions, dans un sens et dans l'autre, comprises entre deux conditions de repos successives de la même session (idle conditions).

Chaque session est caractérisée par une fonction de données spécifique qui distingue les unités de travail de la même session des unités de travail des autres sessions. Les fonctions de données sont regroupées dans les trois types suivants :
1) fonction de données du type 1, relative aux sessions établies pour les systèmes de poste électronique ;
2) fonction de données du type 2, relatives aussi bien aux sessions établies pour les systèmes informatiques distribués qu'aux sessions établies pour les systèmes informatiques centralisés avec accès basé sur multiplateur, comme par exemple Bull;
3) fonction de données du type 3, relatives aux sessions établies pour les systèmes informatiques centralisés avec accès basés sur concentrateur, comme par exemple IBM.

Tandis que les unités de travail des fonctions de données du type 2 sont demandées par le (opérateur du) PC portatif, les unités de travail des fonctions de données des types 1 et 3 peuvent être demandées aussi bien par le PC portatif que respectivement par les systèmes de poste électronique et par les systèmes informatiques.

Les unités de travail des fonctions de données du type 1 demandées par les systèmes de poste électronique sont inclues aussi bien dans les unités de travail des fonctions de données du type 3 demandées par les systèmes informatiques que dans les unités de travail de n'importe quel type de fonctions de données demandées par le PC portatif, et ne se manifestent donc pas dans le système comme unités de travail autonomes.

Le système discipline en son intérieur le déroulement ordonné des unités de travail relatives au PC portatif, en sorte que. dans le cas de plus d'unités de travail demandées en même temps aussi bien par le même PC portatif que par les systèmes informatiques, une seule au maximum puisse être en cours d'exécution à chaque instant.

Dans le troisième des trois cas énumérés au chapitre 1, la permanence des sessions est garantie en conditionnant le PC portatif à ne pas demander plus d'une unité de travail à la fois.

Pour le premier et le second cas la permanence des sessions est atteinte quand n'existent ni unités de travail en cours d'exécution ni unités de travail demandées par le PC portatif et pas encore en cours d'exécution respectivement au moment du changement de cellule et au moment de la mise hors de service du PC portatif ou du terminal radiomobile.

Dans les deux premiers cas la permanence des sessions est garantie même quand existent des unités de travail demandées par les systèmes informatiques et pas encore en cours d'exécution au moment du changement de cellule et au moment de la mise hors de service du PC portatif ou du terminal radiomobile, comme aussi quand les mêmes unités de travail sont demandées par les systèmes informatiques après le changement de cellule ou durant la mise hors de service des unités en question.

Cette caractéristique est consentie par la technique particulière de transmission de paquets (packet transmission) désignée transmission trunking adoptée dans une première version du système sur le parcours radiomobile.

Dans le cas des systèmes qui adoptent sur le parcours radiomobile la technique conventionnelle de transmission à commutation de paquets (packet switching transmission), la permanence des sessions n'est pas atteinte quand existent des unités de travail demandées par les systèmes informatiques et pas encore en cours d'exécution au moment de la mise hors de service du PC portatif ou du terminal radiomobile, comme aussi quand les mêmes unités de travail sont demandées par les systèmes informatiques durant la mise hors de service des unités en question, même dans le cas où le système garantit le recouvrement des donnés en cours de transmission durant le changement de cellule pour les réacheminer de la cellule précédente à la suivante.

Si un appel radiotéléphonique, entrant ou sortant, commence quand est en cours d'exécution une unité de travail, celle-ci est interrompue, tandis que pour atteindre la permanence des sessions, à la fin de l'appel radiotéléphonique le PC portatif doit reprendre le déroulement de l'unité de travail interrompue. Si l'appel radiotéléphonique commence quand existent des unités de travail demandées par le PC portatif et pas encore en cours d'exécution, pour atteindre la permanence des sessions à la fin de l'appel radiotéléphonique le PC portatif doit consentir le déroulement des unités de travail en question.

Si l'appel radiotéléphonique commence quand n'est en cours d'exécution aucune unité de travail et n'existent pas des unités de travail demandées par le PC portatif et pas encore en cours d'exécution, pour atteindre la permanence des sessions à la fin de l'appel radiotéléphonique le PC portatif n'est pas obligé à consentir, tout en restant dans la même cellule dans laquelle a commencé l'appel radiotéléphonique, le déroulement des unités de travail dont l'opérateur n'a pas de connaissance, dans le cas d'existence d'unités de travail demandées par les systèmes informatiques et pas encore en cours d'exécution au début de l'appel radiotéléphonique comme aussi dans le cas d'unités de travail demandées par les systèmes informatiques durant l'appel radiotéléphonique.

Cette caractéristique est consentie par la technique transmission trunking adoptée dans une première version du système sur le parcours radiomobile.

Dans le cas des systèmes qui adoptent sur le parcours radiomobile la technique conventionnelle de transmission à commutation de paquets, pour atteindre la permanence des sessions à la fin de l'appel radiotéléphonique le PC portatif est obligé à consentir, tout en restant dans la même cellule dans laquelle a commencé l'appel radiotéléphonique, le déroulement des unités de travail dont l'opérateur n'a pas connaissance, dans le cas d'existence d'unités de travail demandées par les systèmes informatiques et pas encore en cours d'exécution au début de l'appel radiotéléphonique , comme aussi dans le cas d'unités de travail demandées par les systèmes informatiques durant l'appel radiotéléphonique, même quand le système garantit le recouvrement des données en cours de transmission durant le changement de cellule pour les réacheminer de la cellule précédente à la suivante.

### 3. DESCRIPTION STRUCTURELLE DU SYSTEME

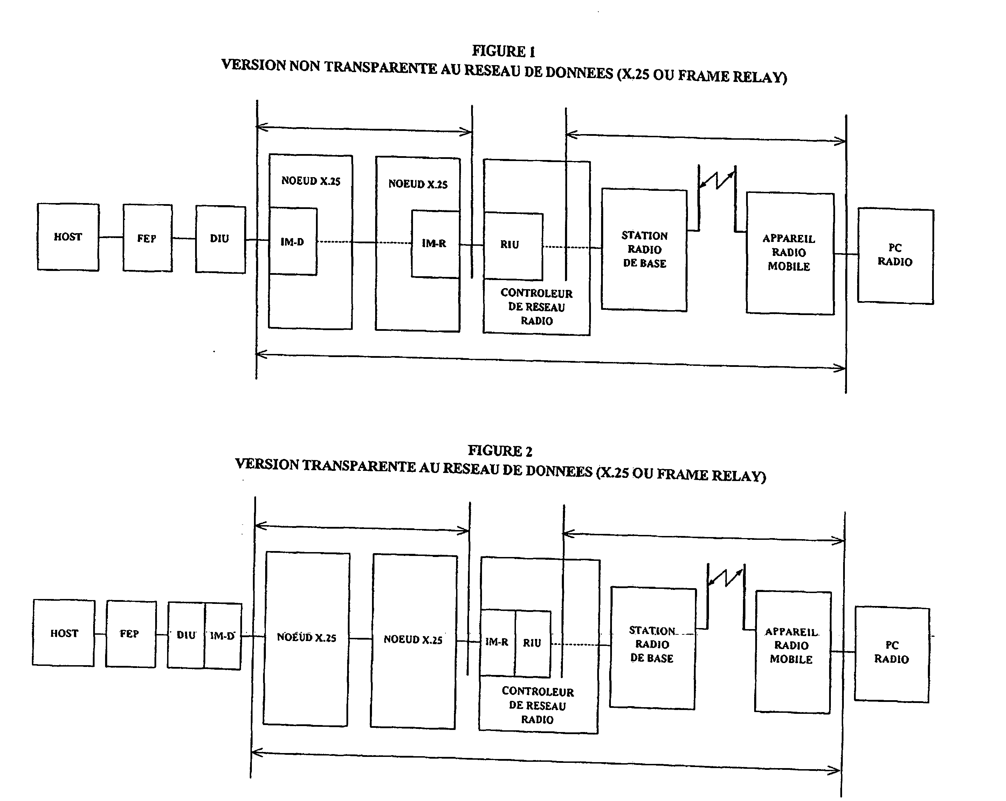

Le système de communication de données est représenté dans une première version dans la Figure 1, où l'architecture de réseau est reconduite au cas d'un système informatique centralisé constitué uniquement par un ordinateur central (Host) et par son Front End Processor (FEP).

Dans le cas du réseau GSM, le contrôleur de réseau radio (radio network controller) correspond au centre de commutation mobile, MSC (Mobile Switching Centre), tandis que la station radio de base (radio base station) correspond au système de station de base, BSS (Base Station System), constitué par l'ensemble du contrôleur de station de base, BSC (Base Station Controller) et de la station de base d'émetteur-récepteur, BTS (Base Transceiver Station); en ce qui concerne le service de données, l'ensemble du PC radio et de l'appareil radiomobile correspond à la station mobile, MS (Mobile Station).

Les éléments du système internes à l'infrastructure sont les suivants :
*) unité d'interaction radio, RIU (radio Interworking Unit), intégrée dans le contrôleur de réseau radio relié au noeud du réseau de données fixe qui intègre le géreur d'interface côté RIU et constituée par un module software spécifique résidant sur la carte de communication dans le même contrôleur de réseau radio, qui implémente les procédures de cet élément.
*) géreur d'interface côté RIU, IM-R (Interface Manager side RIU), intégré dans le noeud du réseau de données fixe relié au contrôleur de réseau radio et constitué par un module software spécifique résidant sur la carte de communication dans le même noeud du réseau de données, qui implémente les procédures de cet élément.
*) géreur d'interface côté DIU, IM-D (Interface Manager side DIU), intégré dans le noeud du réseau de données fixe prédisposé pour la liaison à l'unité d'interaction de données et constitué par un module software spécifique résidant sur la carte de communication dans le même noeud du réseau de données, qui implémente les procédures de cet élément.

Les éléments du système externes à l'infrastructure sont les suivants :
*) PC radio, constitué par un PC portatif prédisposé pour la liaison à l'appareil radiomobile et par un module software spécifique résidant dans le même PC portatif, qui implémente les procédures de cet élément.
*) appareil radiomobile (mobile radio set), constitué par un terminal radiomobile doté de touche de connexion et prédisposé pour la liaison au PC radio, et par un module software spécifique résidant sur la carte du même terminal radiomobile, qui implémente les procédures de cet élément.
*) unité d'interaction de données, DIU (Data Interworking Unit) dans les locaux de l'usager, constitué par un serveur de communication prédisposé pour la liaison au noeud du réseau de données fixe qui intègre le géreur d'interface côté DIU, et par un module software spécifique résidant dans le même serveur de communication, qui implémente les procédures de cet élément; pour consentir à l'unité d'interaction de données d'interfacer le système aux architectures de réseau, le serveur de communication est prédisposé pour les liaisons du type LAN (Token Ring, Ethernet) et du type WAN (SDLC, QLLC, HDLC, X.25) demandées par les architectures de réseau interfacées.

L'indépendance du système par rapport aux réseaux radiomobiles publics est due au fait que l'interface radio est caché par ses extrêmes , contrôleur de réseau radio et appareil radiomobile, à l'interface de données entre la RIU et le PC radio.

La RIU gère directement (au moins) un canal radio de la trame TDMA dédié au service de données, désigné justement canal de données, et utilise sur le canal de contrôle de la même trame TDMA la signalisation d'usager (user signalling).

Les signalisations du PC radio-appareil radiomobile à la RIU sont transmises sur le canal de contrôle, tandis que les signalisations de la RIU au PC radio-appareil radiomobile peuvent être transmises aussi bien sur le canal de contrôle que sur les canaux de données, et sont désignées respectivement signalisations communes et signalisations associées.

Les données sont transmises , dans les deux sens, sur les canaux de données.

### 4. SOLUTION DES PROBLEMES DE LA TECHNIQUE CONVENTIONNELLE

Comme indiqué au chapitre 2, les problèmes présentés par les systèmes qui adoptent sur le parcours radiomobile la technique conventionnelle de transmission à commutation de paquets sont relatifs aux systèmes informatiques centralisés avec accès basé sur concentrateur; l'architecture de réseau IBM représente un exemple de ce genre de systèmes informatiques où les noeuds périphériques, PN (Peripheral Nodes) consentent l'accès seulement pour les services de type EDP, tandis que les noeuds terminaux, EN (End Nodes) et les noeuds de réseau, NN (Network Nodes) consentent l'accès aussi bien pour les services de type EDP que pour les services de type OA.

Les systèmes qui adoptent sur le parcours radiomobile la technique conventionnelle de transmission à commutation de paquets implémentent l'architecture de réseau en attribuant au PC portatif la fonction de noeud terminal et au serveur de communication la fonction de noeud de réseau (même si pas réalisée, celle-ci est la perspective inhérente à la technique conventionnelle de transmission à commutation de paquets avec la meilleure performance pour les systèmes informatiques en question).

La première version du système implémente l'architecture de réseau au niveau de noeud périphérique, en utilisant l'interfacement du type DFT (Distributed Function Terminal) entre l'unité de contrôle et le terminal vidéo, et en attribuant à la DIU les fonctions d'unité de contrôle et au PC radio les fonctions de terminal vidéo.

L'interfacement du type DFT adopte en effet un protocole orienté à la trame (Frame Oriented Protocol) qui en consent l'utilisation sur le réseau radiomobile, tandis que l'interfacement du type CUT (Control Unit Terminal) adopte un protocole orienté au caractère (Character Oriented Protocol) qui n'en consent pas l'utilisation sur le même réseau radiomobile.

De telle manière, les systèmes qui adoptent sur le parcours radiomobile la technique conventionnelle de transmission à commutation de paquets consentent aussi bien les services du type EDP que les services du type OA, mais présentent les problèmes indiqués au chapitre 2, tandis que la première version du système élimine ces problèmes en limitant le fonctionnement aux services du type EDP; cette limitation ne constitue du reste un désavantage, du moment que l'application radiomobile ne demande pas les services du type OA pour les usagers professionnels.

### 5. DESCRIPTION DES INTERFACES

A côté de chaque signalisation est indiquée entre parenthèses avec les sigles INB et OUTB respectivement la transmission dans le sens du PC radio-appareil radiomobile à la DIU et la transmission dans le sens contraire ; pour les transmissions OUTB sur le parcours entre la RIU et le PC radio-appareil radiomobile est ultérieurement précisé avec les sigles CS et AS respectivement s'il s'agit de signalisation commune ou bien de signalisation associée.

### INTERFACE ENTRE LA DIU ET LE PC RADIO-APPAREIL RADIOMOBILE

Demande de connexion (INB) CONN
Connexion avec initialisation (OUTB, CS) CONN
Connexion sans initialisation (OUTB, CS) CONN
Envoi (INB) IMP
Remise (OUTB, AS) IMP
Livraison (INB) IMP
Lien (OUTB, CS) IMP
Contact (OUTB, AS) IMP
Dénouement (OUTB, AS) IMP
Déliement (OUTB, AS) IMP
INTERFACE ENTRE LA DIU ET LA RIU
Enlèvement (INB) CONN
Déconnexion avec réplique (OUTB) CONN
Déconnexion sans réplique (OUTB) CONN
Réplique de déconnexion (INB) CONN
Initialisation (INB) CONN
Extraction (INB) CONN
Confirmation de lien (INB) IMP
INTERFACE ENTRE LA RIU ET LE PC RADIO-APPAREIL RADIOMOBILE
Interruption (INB) CONN
Fin d'interruption (INB) CONN
Demande de transmission, (INB) IMP
Transmission (OUTB AS) IMP
Fin de transmission (INB) IMP
Rappel de connexion (OUTB, CS) CONN
INTERFACE ENTRE L'IM-R ET LE PC RADIO-APPAREIL RADIOMOBILE
Demande de connexion (INB) CONN
Connexion sans initialisation (OUTB, CS) CONN
Envoi (INB) IMP
Rappel de connexion (OUTB, CS) CONN
Livraison (INB) IMP
INTERFACE ENTRE L'IM-R ET LA RIU
Demande d 'enlèvement (OUTB) CONN
Demande de transmission (OUTB) IMP
Transmission (INB) IMP
Fin de transmission (OUTB) IMP
INTERFACE ENTRE LA DIU ET L'IM-D
Demande de transmission (OUTB) IMP
Transmission (INB) IMP
Fin de transmission (OUTB) IMP
INTERFACE ENTRE L'IM-D ET L'IM-R
Fin du flux de données (OUTB) IMP

Les sigles CONN et IMP après les parenthèses précisent si la signalisation se réfère respectivement aux procédures de connexion ou bien aux procédures de lien.

En ce qui concerne les données, le flux INB est transmis du PC radio à l'IM-R avec la coordination des signalisations de demande de transmission, transmission et fin de transmission de l'interface entre la RIU et le PC radio-appareil radiomobile; ensuite est acheminé sur le réseau de données de l'IM-R à l'IM-D, pour être enfin envoyé de l'IM-D à la DIU.

Le flux de données OUTB est transmis de la DIU à l'IM-D avec la coordination des signalisations de demande de transmission, transmission et fin de transmission de l'interface entre la DIU et l'IM-D; ensuite est acheminé sur le réseau de données de l'IM-D à l'IM-R pour être enfin transmis de l'IM-R au PC radio avec la coordination des signalisations de demande de transmission, transmission et fin de transmission de l'interface entre l'IM-R et la RIU.

Dans l'appareil radiomobile sont mémorisés de façon permanente l'adresse de réseau, NA (Network Address) qui détermine dans le réseau de données l'IM-D auquel est relié la DIU, l'identificatif d'usager, UID (User Identifier) et les identificatifs des fonctions de données, DFID (Data Function Identifiers) qui caractérisent les sessions établies ou qui peuvent être établies sur les architectures de réseau pour le PC radio relié au même appareil radiomobile.

Dans la DIU sont mémorisés de façon permanente les UID des appareils radiomobiles qualifiés pour le service de données et pour chaque UID les DFID qui caractérisent les sessions établies ou qui peuvent être établies sur les architectures de réseau pour le PC radio relié à l'appareil radiomobile individué par le même UID.

Les signalisations qui se réfèrent à la connexion ont l'UID comme paramètre; outre à l'UID la demande de connexion a le NA comme paramètre.

A chaque unité de travail qui se déroule sur chaque session correspond dans le système un lien; les liens correspondants aux unités de travail qui se déroulent sur une session sont contremarqués par le DFID qui caractérise la même session.

Les signalisations qui se référent au lien ont l'UID et le DFID comme paramètres.

La connexion est associée à l'IM-R qui a reçu la demande de connexion, tandis qu'à l'intérieur de la RIU le lien est associé au canal de données assigné à son service.

Quand le lien est demandé par le PC radio, la RIU assigne à son service le (un) canal de données de la trame TMDA du canal de contrôle de laquelle elle a reçu la signalisation d'envoi, comme indiqué au chapitre 7 dans le cas d'envoi en absence de lien.

Quand le lien est demandé par le système informatique, la RIU assigne à son service le même canal de données assigné au service du dernier lien, comme indiqué au chapitre 7 dans le cas de flux de données OUTB en absence de lien; dans ce but la RIU mémorise le canal de données assigné au service du dernier lien, tandis que la demande de connexion initialise cette mémorisation en agissant comme la signalisation d'envoi quand le lien est demandé par le PC radio.

Le lien et le dénouement déterminent le début et la fin de la condition de lien; le contact et le déliement déterminent le début et la fin de la condition de déblocage; les conditions de lien et de déblocage sont définies dans la DIU, dans l'IM-D, dans l'IM-R, dans la RIU et dans le PC radio-appareil radiomobile; le déblocage est interne au lien ; le blocage indique la condition contraire au déblocage.

La signalisation de fin de transmission de l'interface entre la RIU et le PC radio-appareil radiomobile constitue l'exception des signalisations transmises par le PC radio-appareil radiomobile, puisqu'elle est l'unique à être transmise sur le canal de données.

### 6. DESCRIPTION DES PROCEDURES DE CONNEXION

Quand la demande de connexion est acceptée par la DIU, comme précisé en avant, les signalisations de connexion et de déconnexion déterminent respectivement le début et la fin de la condition de connexion, définie dans la DIU, dans l'IM-D, dans l'IM-R et dans la RIU; en outre, en présence de connexion pour l'UID indiqué dans la demande de connexion, la connexion elle même est réacheminée du couple précédent de IM-R, RIU au couple suivant de IM-R, RIU.

S'il n'existe pas une connexion quand la demande de connexion est acceptée par la DIU, la condition de connexion est précédée d'une phase de connexion singulière, déterminée par la séquence des signalisations de demande de connexion et de connexion, définie dans la DIU, dans l'IM-D, dans l'IM-R et dans la RIU.

S'il existe une connexion quand la demande de connexion est acceptée par la DIU, la condition de connexion suivante est précédée d'une phase de connexion-déconnexion, déterminée par la séquence des signalisations de demande de connexion, de déconnexion avec réplique, de réplique de déconnexion et de connexion; les signalisations de demande de connexion et de connexion déterminent une phase externe de connexion relative à la condition de connexion suivante; les signalisations de déconnexion avec réplique et de réplique de déconnexion déterminent une phase interne de déconnexion relative à la condition de connexion précédente; la phase de connexion-déconnexion est définie dans la DIU et dans l'IM-D; la phase externe de connexion, outre que dans la DIU et dans l'IM-D, est définie dans l'IM-R et dans la RIU relatives à la condition de connexion suivante; la phase interne de déconnexion, outre que dans la DIU et dans l'IM-D, est définie dans l'IM-R et dans la RIU relatives à la condition de connexion précédente.

La condition de connexion est suivie d'une phase de déconnexion déterminée par la séquence des signalisations de déconnexion avec réplique et de réplique de déconnexion; la phase de déconnexion peut être interne, comme dit ci-dessus, ou bien singulière; dans le premier cas la phase de déconnexion ne conclut pas la série des connexions et est amorcée dans la DIU par la signalisation de demande de connexion; dans le second cas la phase de déconnexion conclut la série des connexions et est amorcée dans la DIU par la signalisation d'enlèvement.

Quand elle est singulière, la phase de déconnexion est définie pareillement dans la DIU, dans l'IM-D, dans l'IM-R et dans la RIU, et détermine dans la DIU et dans l'IM-D une condition d'enlèvement; quand elle est interne, la phase de déconnexion détermine dans la DIU et dans l'IM-D une condition de suspension qui se prolonge jusqu'à la signalisation de connexion successive, avec ou sans initialisation.

La phase de déconnexion singulière et la phase de déconnexion interne déterminent dans l'IM-R et dans la RIU une condition d'enlèvement.

La condition de connexion peut être aussi suivie d'une phase de déconnexion isolée déterminée par la seule signalisation de déconnexion sans réplique, qui conclut la série des connexions et est amorcée dans la DIU par la signalisation d'extraction.

La condition de suspension s'applique en outre, dans la DIU et dans l'IM-D, tant à la durée délimitée par la signalisation de connexion avec initialisation et par la signalisation d'initialisation ou bien d'extraction quant à la durée délimitée par la signalisation d'extraction et par la signalisation de déconnexion sans réplique, aussi bien à la suite de la phase de connexion -déconnexion qu'à la suite de la phase de connexion singulière.

Quand la demande de connection est rejetée par la DIU, il n'est pas commencé une connexion et il se réalise une unique phase de connexion isolée, déterminée par la séquence des signalisations de demande de connexion et de déconnexion sans réplique, pareillement définie dans la DIU, dans l'IM-D, dans l'IM-R et dans la RIU.

La DIU rejète les demandes de connexion reçues pour UID non qualifiées ou bien inhabilitées au service de données, tandis qu'elle renvoie jusqu'au terme de la condition d'enlèvement les demandes de connexion reçues pour UID en phase de déconnexion et en condition justement d'enlèvement; quand elle n'est ni rejetée ni renvoyée, la demande de connexion est acceptée par la DIU; si elle est renvoyée, la demande de connexion est acceptée au terme de la condition d'enlèvement.

La condition de déconnexion est définie dans la DIU, dans l'IM-D, dans l'IM-R et dans la RIU quand il n'existe ni une phase de connexion, singulière ou externe, ni une condition de connexion, ni une phase de déconnexion, singulière ou interne.

Quand elle reçoit la demande de connexion, s'il se trouve en phase de connexion, en condition de connexion ou bien en phase de déconnexion, l'IM-R intercepte la demande de connexion même et transmet au PC-radio-appareil radiomobile la signalisation de connexion sans initialisation ; s'il se trouve en condition de déconnexion, l'IM-R instaure le circuit virtuel commué, SVC (Switched Virtual Circuit) avec l'IM-D déterminé par le NA et achemine sur le même SVC la demande de connexion que l'IM-D envoie à la DIU.

L'IM-R et l'IM-D associent le SVC qui les relie à travers le réseau de données avec l'UID indiqué dans la demande de connexion qui a déterminé l'instauration du même SVC.

L'IM-R quand il transmet la réplique de déconnexion et l'IM-D quand il transmet la déconnexion sans réplique abattent le SVC associé à l'UID indiqué dans ces signalisation.

Quand il reçoit l'envoi, s'il se trouve en phase de connexion, en condition de connexion ou bien en phase de déconnexion , l'IM-R achemine l'envoi même sur le SVC associé à l'UID indiqué dans la signalisation ; s'il se trouve en condition de déconnexion , l'IM-R intercepte l'envoi et transmet au PC radio le rappel de connexion pour conditionner le même PC radio, qui utilise dans ce but le critère de réception de cette signalisation à l'intérieur de la période délimitée par les signalisations d'envoi et de remise, à répéter l'envoi à la connexion successive.

Dans les deux cas indiqués ci-dessus, quand il reçoit la livraison, l'IM-R respectivement achemine la signalisation sur le SVC associé à l'UID indiqué dans la signalisation elle-même ou bien écarte la même signalisation .

Comme signalisation le lien peut être ou non simultané avec le contact respectivement selon que l'unité de travail correspondante ait été demandée par le PC radio ou bien par le système informatique.

Comme condition, le lien existant dans la RIU peut être ou non en cours d'exécution respectivement selon que l'instant considéré soit successif ou bien précédant à la réception de la part de la même RIU de l'accusé de réception de la signalisation de lien, quand cet accusé de réception est reçu ; quand la RIU ne reçoit pas l'accusé de réception de la signalisation de lien, la condition de lien pas encore en cours d'exécution n'est pas suivie de la condition de lien en cours d'exécution, mais de l'arrêt du service du lien avec enlèvement conséquent du lien même.

Les liens existants au moment de la déconnexion et pas encore en cours d'exécution sont enlevés dans la phase de déconnexion pour être abolis ou bien pour être répétés respectivement selon qu'ils soient simultanés ou non avec le contact; si au moment de la déconnexion il existe un lien en cours d'exécution, il est aboli dans la phase de déconnexion.

La DIU transmet à l'IM-D comme demandes de transmission ou bien suspend pour les renvoyer au terme de la condition de suspension les liens qui commencent justement dans la condition de suspension respectivement selon qu'ils soient ou non simultanés avec le contact; l'IM-D suspend les demandes de transmission reçues en condition de suspension jusqu'au terme de la condition même.

La DIU abolit ou bien suspend pour les renvoyer au terme de la successive condition de suspension les liens qui commencent dans la condition d'enlèvement ou bien dans la condition de déconnexion respectivement selon qu'ils soient ou non simultanés avec le contact.

La DIU écarte les flux de données OUTB quand ces flux commencent dans la condition d'enlèvement ou bien dans la condition de déconnexion.

La DIU transmet à l'IM-D comme demandes de transmission ou bien écarte les flux de données OUTB quand ces flux commencent dans la condition de suspension respectivement selon qu'ils correspondent ou non aux liens transmis à l'IM-D comme demandes de transmission.

Dans la condition d'enlèvement et dans la condition de déconnexion la DIU mémorise les fonctions de données correspondantes aux liens abolis et les fonctions de données correspondantes aux liens suspendus pour être renvoyés.

Dans la condition de suspension la DIU mémorise les fonctions de données correspondantes aux liens transmis à l'IM-D comme demandes de transmission et les fonctions de données correspondantes aux liens suspendus pour être renvoyés.

Avec la réplique de déconnexion la DIU mémorise les fonctions de données notifiées par la même signalisation comme précisé en avant et correspondantes aux liens enlevés pour être abolis ou bien répétés, en les ajoutant aux fonctions de données mémorisées aussi bien dans la condition d'enlèvement que dans la condition de déconnexion et correspondantes aux liens respectivement abolis ou suspendus pour être renvoyés.

Quand elle reçoit l'initialisation, la DIU initialise dans son propre intérieur, si elles existent, les fonctions de données correspondantes aux liens abolis ou bien enlevés pour être abolis, et écarte les liens éventuels suspendus pour être renvoyés ou bien enlevés pour être répétés, quand ces liens correspondent aux fonctions de données initialisées.

Dans le cas des fonctions de données du type 3 l'initialisation implique pour la DIU la clôture du propre extrême de la session avec le moniteur transactionnel, quand la session même résulte ouverte; ensuite la DIU dans l'ordre met hors de service, s'il résulte en service, et de toute façon met en service à nouveau le terminal virtuel. Avec la signalisation de connexion avec initialisation, la DIU initialise dans le PC radio les fonctions de données qu'elle initialise dans son propre intérieur ; si elle n'initialise aucune fonction de données dans son propre intérieur, la DIU transmet la signalisation de connexion sans initialisation.

Au terme de la condition de suspension la DIU transmet, conformément à la condition de conjonction précisée ci-dessous et tant que dure la condition de connexion, les signalisations de lien relatives aux fonctions de données mémorisées et correspondantes aux liens suspendus pour être renvoyés ou bien enlevés pour être répétés.

Les fonctions de données correspondantes aux liens abolis ou bien suspendus pour être renvoyés et les fonctions de données correspondantes aux liens enlevés pour être abolis ou bien répétés sont mémorisés en respectant l'ordre chronologique de début des liens mêmes.

Le lien simultané avec le contact est transmis de la DIU à l'IM-D en correspondance de la transmission d'un flux de données OUTB; le début du lien en question détermine dans la DIU une condition de conjonction, qui termine à la fin de transmission de la transmission en correspondance de laquelle est transmis le lien même.

Quand un lien non simultané avec la contact commence dans la condition de conjonction relative au même UID et au même DFID, est suspendu pour être transmis conjointement à la fin de transmission qui détermine la conclusion de la même condition de conjonction; quand il reçoit cette signalisation conjointe l'IM-D achemine le lien non simultané avec le contact conjointement à la signalisation de fin du flux de données précisé ci-dessous sur le SVC correspondant à l'UID indiqué dans la même signalisation conjointe; quand il reçoit cette signalisation conjointe, l'IM-R d'abord élabore la fin du flux de données comme indiqué ci-dessous et ensuite transmet à la RIU le lien non simultané avec le contact; de telle façon dans le cas de la condition de conjonction le lien simultané avec le contact est transmis à la RIU avant le lien non simultané avec le contact ( la condition de conjonction s'applique aussi aux liens transmis à la fin de la condition de suspension).

Quand elle reçoit l'accusé de réception de la connexion avec initialisation, la RIU transmet la signalisation d'initialisation; si elle ne reçoit pas l'accusé de réception de la connexion avec initialisation, la RIU transmet la signalisation d'extraction, comme précisé en avant.

A la suite de la signalisation de connexion sans initialisation ou bien à la suite de la signalisation d'initialisation la DIU efface les fonctions de données mémorisées et correspondantes aux liens abolis et efface, conformément à la condition de conjonction, les fonctions de données mémorisées dans la condition d'enlèvement et dans la condition de déconnexion et correspondantes aux liens suspendus pour être renvoyés.

A la suite de la signalisation de connexion sans initialisation ou bien à la suite de la signalisation d'initialisation la DIU efface les fonctions de données mémorisées et correspondantes aux liens transmis à l'IM-D comme demandes de transmission et efface, conformément à la condition de conjonction, les fonctions de données mémorisées dans la condition de suspension et correspondantes aux liens suspendus pour être renvoyés.

Quand elle reçoit la signalisation d'extraction la DIU efface les fonctions de données mémorisées et correspondantes aux liens transmis à l'IM-D comme demandes de transmission, en les ajoutant aux fonctions de données mémorisées et correspondantes aux liens abolis.

Quand elle reçoit la signalisation d'extraction la DIU efface les fonctions de données mémorisées dans la condition de suspension et correspondantes aux liens suspendus pour être renvoyés, en les ajoutant aux fonctions de données mémorisées dans la condition d'enlèvement et dans la condition de déconnexion et correspondantes aux liens suspendus pour être renvoyés.

La DIU et l'IM-R utilisent une queue de transmission trunking dans laquelle sont insérés les flux de données OUTB en attente de transmission, séparés les uns des autres par un signal approprié de fin du flux de données, inclus par la DIU dans la même queue de transmission trunking, tandis que quand il reçoit la fin de transmission l'IM-D transmet à l'IM-R une signalisation de fin du flux de données, en l'acheminant sur le SVC; la DIU maintient pour chaque UID un indicateur, mis à jour à la fin de chaque transmission, pour déterminer dans la queue de transmission trunking le début du prochain flux de données OUTB qui doit être transmis pour le même UID, sur la base du signal de fin du flux de données.

Les flux de données OUTB que le noeud du réseau de données reçoit de chaque SVC sont insérés dans la zone de mémoire assignée dans le même noeud à la queue des données reçues du SVC en question, en sorte que la queue de transmission trunking de l'IM-R est constituée par l'ensemble des zones de mémoire assignées dans le noeud du réseau de données aux queues de données reçues de tous les SVC; quand il reçoit la signalisation de fin du flux de données, l'IM-R accède directement à cette zone de mémoire (Direct Memory Access) pour déterminer si le flux de données reçu du noeud, déterminé sur la base de la correspondance de l'UID et du DFID entre la signalisation de fin du flux de données et le signal de fin du flux de données, est précédé ou non de la signalisation de lien, dans le but respectivement d'extraire la signalisation même et de le transmettre à la RIU conjointement à la demande de transmission ou bien de transmettre à la même RIU seulement la demande de transmission; cette opération sera indiquée par la suite de la manière suivante : quand il reçoit le flux de données OUTB, l'IM-R l'insère dans la queue de transmission trunking et transmet à la RIU la demande de transmission, éventuellement conjointe avec le lien.

Quand il reçoit de la RIU la transmission l 'IM-R conditionne le noeud du réseau de données à transmettre les données jointes à la zone de mémoire assignée à la queue de données reçues du SVC correspondant à l'UID, jusqu'au premier signal de fin du flux de données inséré dans la queue en question.

Les signalisations et les données transmises aussi bien de la DIU à l'IM-D que de l'IM-R à la RIU sont insérés en deux queues de transmission distinctes, où la queue de transmission des signalisations est servie avec précédence par rapport à la queue de transmission des données (preemptive queue); la même chose vaut pour les signalisations et les données transmises aussi bien de la RIU à l'IM-R que de l'IM-D à la DIU.

Dans le sens OUTB la distinction entre les signalisations et les données concerne les signalisations transmises séparément des flux de données , qui sont insérées dans la queue de transmission des signalisations, tandis que les signalisations transmises ensemble aux flux des données sont insérées dans la queue de transmission des données; le noeud du réseau de données transfère à l'IM-R les signalisations reçues des SVC séparément des flux de données et insère dans la queue de transmission trunking les signalisations reçues des SVC ensemble aux flux de données (la signalisation de fin du flux de données est transmise séparément du flux de données correspondant tandis que le signal de fin du flux de données est transmis ensemble au flux de données correspondant).

L'IM-D utilise une queue des tours de transmission dans laquelle sont insérées les demandes de transmission transmises de la DIU; la RIU utilise une queue des tours de transmission pour chaque canal de données, dans laquelle sont insérées les demandes de transmission transmises de l'IM-R et relatives aux canaux de données en question.

L'IM-D maintient un enregistrement de connexion pour chaque UID en phase de connexion, en condition de connexion et en phase de déconnexion, qui peut être contremarqué avec la marque de suspension pour déterminer la condition de suspension.

La RIU maintient une fiche de connexion pour chaque UID en phase de connexion, en condition de connexion et en phase de déconnexion, qui contient un enregistrement de lien pour chaque lien existant dans la RIU pour l'UID correspondant à la même fiche; les enregistrements de lien sont insérés dans la fiche de connexion selon l'ordre d'arrivée dans la RIU des liens correspondants aux enregistrements mêmes.

L'enregistrement de lien contient un flag de lien simultané avec le contact maintenu levé ou abaissé respectivement suivant que le lien correspondant à l'enregistrement soit justement simultané ou non avec le contact.

La signalisation de lien conditionne l'appareil radiomobile à se déplacer du canal de contrôle au canal de données assigné par la RIU au service du lien, jusqu'à la signalisation de dénouement qui détermine le retour du même appareil radiomobile du canal de données au canal de contrôle; quand il transmet l'interruption ou bien la fin d'interruption, s'il se trouve en condition de lien, l'appareil radiomobile se déplace respectivement du canal de données au canal de contrôle ou bien du canal de contrôle au canal de données.

L'enregistrement de lien contient une référence au canal de données assigné par la RIU au service du lien correspondant au même enregistrement.

La fiche de connexion peut être contremarquée avec les marques d'interruption, d'extraction, d'enlèvement par abolition et d'enlèvement par répétition, dans le but de déterminer la cause de l'éventuel arrêt du service du premier lien enregistré dans la fiche même.

L'interruption est provoquée par un appel radiotéléphonique entrant ou sortant, dont le début et dont la fin sont signalés par l'appareil radiomobile à la RIU respectivement avec les signalisations d'interruption et de fin d'interruption.

L'extraction est provoquée dans la RIU par le manque de l'accusé de réception de la connexion avec initialisation transmise de la même RIU au PC radio-appareil radiomobile; dans ce cas la RIU transmet à la DIU la signalisation d'extraction.

L'enlèvement peut être provoqué dans la RIU aussi bien par le manque de l'accusé de réception du lien transmis de la même RIU au PC radio-appareil radiomobile, que dans l'IM-R par une erreur de transmission du même IM-R au PC radio; dans le premier cas la RIU transmet à la DIU la signalisation d'enlèvement; dans le second cas, l'IM-R transmet à la RIU la signalisation de demande d'enlèvement, à la suite de laquelle la RIU transmet à la DIU la signalisation d'enlèvement.

Les demandes de transmission insérées par l'IM-D dans la queue des tours de transmission, les demandes de transmission insérées par la RIU dans les queues des tours de transmission des canaux de données, les connexions, avec ou sans initialisation, et les liens insérés par la même RIU dans la queue de transmission du canal de contrôle peuvent être contremarqués avec la marque de masquage pour exclure ces signalisations du service des queues en question pour toute la durée du masquage.

Quand elle recoit une signalisation de lien, la RIU insère dans la fiche de connexion l'enregistrement de lien avec la référence au canal de données assigné au service du lien même et avec le flag de lien simultané avec le contact levé ou bien abaissé respectivement suivant que le lien soit ou non conjoint avec la demande de transmission; quand l'IM-R transmet la signalisation de dénouement, la RIU extrait l'enregistrement de lien de la fiche de connexion.

Quand la RIU ne recoit pas l'accusé de réception de la connexion avec initialisation transmise par la même RIU au PC radio-appareil radiomobile, elle met dans la fiche de connexion la marque d'extraction; ensuite la RIU transmet la signalisation d'extraction si la fiche de connexion n'est pas contremarquée avec une marque d'enlèvement.

Quand la RIU ne recoit pas l'accusé de réception du lien transmis par la même RIU au PC radio-appareil radio mobile, elle met dans la fiche de connexion la marque d'enlèvement par abolition ou bien par répétition respectivement suivant que le flag de lien simultané avec le contact du premier lien enregistré dans la même fiche de connexion soit levé ou bien abaissé; ensuite la RIU transmet la signalisation d'enlèvement si la fiche de connexion n'est pas contremarquée avec la marque d'extraction.

Quand elle reçoit la demande d'enlèvement, la RIU met dans la fiche de connexion la marque d'enlèvement par abolition; ensuite la RIU transmet la signalisation d'enlèvement si la fiche de connexion n'est pas contremarquée avec la marque d'extraction.

Quand elle reçoit une demande de transmission, en absence de la fiche de connexion correspondante à l'UID indiqué dans la signalisation même, la RIU intercepte cette signalisation et transmet au PC radio le rappel de connexion.

En présence de la fiche de connexion correspondant à l'UID indiqué dans la demande de transmission, si le canal de données assigné au service du premier lien enregistré dans la fiche de connexion n'appartient pas à la trame TDMA, du canal de contrôle de laquelle a été reçue la signalisation même , la RIU intercepte la même demande de transmission et met dans la fiche de connexion la marque d'enlèvement par abolition; ensuite la RIU transmet la signalisation d'enlèvement si la fiche de connexion n'est pas contremarquée avec la marque d'extraction.

La DIU écarte les éventuelles signalisations d'enlèvement reçues dans la phase de déconnexion en condition de suspension.

Quand elle met dans la fiche de connexion la marque d'enlèvement, la RIU met les marques de masquage dans les éventuelles demandes de transmission insérées dans la queue des tours de transmission du canal de données assigné au service du lien enlevé et relatives au premier lien enregistré dans la fiche de connexion.

En présence d'une marque d'enlèvement dans la fiche de connexion, la RIU insère avec la marque de masquage dans la queue des tours de transmission du canal de données assigné au service du lien enlevé les demandes de transmission relatives au premier lien enregistré dans la même fiche de connexion.

Le cas de la marque d'extraction est analogue au cas de la marque d'enlèvement indiqué ci-dessus, avec la différence que outre aux demandes de transmission subit le masquage aussi l'éventuelle signalisation de lien insérée dans la queue de transmission du canal de contrôle et relative au premier lien enregistré dans la fiche de connexion.

Le cas de la marque d'interruption est analogue au cas de la marque d'extraction indiqué ci-dessus, avec la différence que outre aux demandes de transmission et à la signalisation de lien subit le masquage aussi l'éventuelle signalisation de connexion, avec ou sans initialisation, insérée dans la queue de transmission du canal de contrôle et correspondante à l'UID qui détermine la fiche de connexion.

Quand elle reçoit la signalisation de fin d'interruption, la RIU ôte les marques de masquage aussi bien dans l'éventuelle signalisation de lien insérée dans la queue de transmission du canal de contrôle et relative au premier lien enregistré dans la fiche de connexion que dans l'éventuelle signalisation de connexion insérée dans la même queue de transmission et correspondante à l'UID qui détermine la fiche de connexion, comme aussi dans les éventuelles demandes de transmission insérées dans la queue des tours de transmission du canal de données assigné au service du lien et relatives au premier lien enregistré dans la fiche de connexion.

En absence des marques indiquées ci-dessus dans la fiche de connexion, la RIU insère sans la marque de masquage dans la queue de transmission du canal de contrôle aussi bien la signalisation de lien relative au premier lien enregistré dans la fiche de connexion que la signalisation de connexion correspondante à l'UID qui détermine la même fiche de connexion, et insère sans la marque de masquage dans la queue des tours de transmission du canal de données assigné au service du lien les demandes de transmission relatives au premier lien enregistré dans la fiche de connexion.

La RIU insère avec la marque de masquage dans la queue de transmission du canal de contrôle les signalisations de lien relatives aux liens successifs au premier enregistrés dans la fiche de connexion, et insère avec la marque de masquage dans les queues des tours de transmission des canaux de données assignés au service des liens les demandes de transmission relatives aux liens successifs au premier enregistrés dans la fiche de connexion.

A la suite de la transmission de la part de l'IM-R de la signalisation de dénouement et à la conséquente extraction de la part de la RIU de l'enregistrement de lien relatif au premier lien enregistré dans la fiche de connexion, la même RIU ôte les marques de masquage aussi bien dans la signalisation de lien insérée dans la queue de transmission du canal de contrôle et relative au premier lien courant enregistré dans la fiche de connexion, que dans les demandes de transmission insérées dans la queue des tours de transmission du canal de données assigné au service du lien et relatives au premier lien courant enregistré dans la fiche de connexion.

En présence de la marque de suspension dans l'enregistrement de connexion correspondant à un UID en condition de suspension, l'IM-D insère avec la marque de masquage dans la queue des tours de transmission les demandes de transmission reçues à l'intérieur de la même condition de suspension et relatives à l'enregistrement de connexion contremarqué avec la marque de suspension; au terme de la condition de suspension l'IM-D ôte la marque de masquage dans les demandes de transmission insérées dans la queue des tours de transmission et relatives à l'enregistrement de connexion contremarqué avec la marque de suspension.

Dans la phase de déconnexion aussi bien interne que singulière, la DIU et l'IM-R écartent les signalisations de transmission reçues respectivement de l'IM-D et de la RIU.

La signalisation de déconnexion avec réplique élimine dans la DIU les flux de données OUTB insérés dans la queue de transmission trunking et correspondants à l'UID indiqué dans la signalisation même, en insérant dans le champ du propre format dédié aux fonctions de données correspondantes aux liens enlevés pour être abolis, les DFID relatifs aux flux de données précédés par la signalisation de lien.

La signalisation de déconnexion avec réplique élimine dans l'IM-D les demandes de transmission insérées dans la queue des tours de transmission et correspondantes à l'UID indiqué dans la signalisation même.
La signalisation de déconnexion avec réplique élimine dans l'IM-R les flux de données OUTB insérés dans la queue de transmission trunking dans la zone de mémoire assignée au SVC correspondant à l'UID indiqué dans la signalisation même.

La transmission de la signalisation de lien détermine dans la RIU une condition de renvoi jusqu'à la réception de l'accusé de réception du lien ou bien jusqu'à la détermination du manque de l'accusé de réception du même lien.

Si la signalisation de déconnexion avec réplique est reçue par la RIU en condition de renvoi, elle est suspendue pour être renvoyée au terme de la même condition de renvoi.

La signalisation de déconnexion avec réplique élimine dans la RIU aussi bien les demandes de transmission insérées dans la queue des tours de transmission des canaux de données assignés au service des liens et correspondantes aux liens enregistrés dans la fiche de connexion déterminée par l'UID indiqué dans la signalisation même, que les signalisations de lien insérées dans la queue de transmission du canal de contrôle et correspondantes à la même UID.

La signalisation de déconnexion avec réplique élimine dans la RIU les enregistrements de lien insérés dans la fiche de connexion déterminée par l'UID indiqué dans la signalisation même , en insérant dans les champs du propre format dédiés aux fonctions de données correspondantes aux liens enlevés pour être abolis ou bien répétés, les DFID relatifs aux liens enregistrés dans la même fiche de connexion avec flag de lien simultané avec le contact respectivement levé ou bien abaissé, inclus le premier lien enregistré dans la fiche si la même fiche n'est pas contremarquée avec une marque d'enlèvement quand la relative signalisation de lien est présente dans la queue de transmission du canal de contrôle.

Quand la fiche de connexion déterminée par l'UID indiqué dans la signalisation de déconnexion avec réplique n'est pas contremarquée avec une marque d'enlèvement, si la relative signalisation de lien n'est pas présente dans la queue de transmission du canal de contrôle, le DFID relatif au premier lien enregistré dans la même fiche de connexion est inséré dans la champ du format de la signalisation en question dédié aux fonctions de données correspondantes aux liens enlevés pour être abolis.

Quand la fiche de connexion déterminée par l'UID indiqué dans la signalisation de déconnexion avec réplique est contremarquée avec la marque d'enlèvement par abolition ou bien par répétition, le DFID relatif au premier lien enregistré dans la même fiche de connexion est inséré dans le champ du format de la signalisation en question dédié aux fonctions de données correspondantes aux liens enlevés pour être respectivement abolis ou bien répétés.

Au terme de son parcours la signalisation de déconnexion avec réplique transfère dans la réplique de déconnexion les champs du propre format dédiés aux fonctions de données correspondantes aux liens enlevés pour être aussi bien abolis que répétés.

La réplique de déconnexion élimine dans la RIU et dans l'IM-D, quand dans ces éléments subsiste la condition d'enlèvement, respectivement la fiche de connexion et l'enregistrement de connexion déterminés toutes les deux par l'UlD indiqué dans la signalisation même.

La signalisation de déconnexion sans réplique élimine dans la DIU les flux de données OUTB insérés dans la queue de transmission trunking et correspondants à l'UID indiqué dans la signalisation même.

La signalisation de déconnexion sans réplique élimine dans l'IM-D les demandes de transmission insérées dans la queue des tours de transmission et correspondantes à l'UID indiqué dans la signalisation même.

La signalisation de déconnexion sans réplique élimine dans l'IM-R les flux d données OUTB insérés dans la queues de transmission trunking dans la zone de mémoire assignée au SVC correspondant à l'UID indiqué dans la signalisation même.

La signalisation de déconnexion sans réplique élimine dans la RIU aussi bien les demandes de transmission insérées dans les queues des tours de transmission des canaux de données assignés au service des liens et correspondantes aux liens enregistrés dans la fiche de connexion déterminée par l'UID indiqué dans la signalisation même, que les signalisations de lien insérées dans la queue de transmission du canal de contrôle et correspondantes à la même UID.

La signalisation de déconnexion sans réplique élimine dans la RIU et dans l'IM-D respectivement la fiche de connexion et l'enregistrement de connexion déterminés toutes les deux par l'UID indiqué dans la signalisation même.

Finalement l'opérateur peut inhabiliter, s'il est habilité, et habiliter, s'il est inhabilité, le propre UID au service de données au moyen d'un PC radio relié à n'importe quel appareil radiomobile par l'insertion dans des commandes appropriées respectivement d'inhabilitation et d'habilitation d'un mot de passe (password) spécifique d'habilitation/inhabilitation mémorisée de manière permanente dans la DIU et associé de manière univoque au même UID; l'appareil radiomobile inclut ce mot de passe dans la demande de connexion, avec l'indication de la commande reçue du PC radio.

En présence du mot de passe en question, la demande de connexion est transmise de l'IM-R à la DIU aussi dans la phase de connexion, dans la condition de connexion et dans la phase de déconnexion correspondantes à l'UID indiqué dans la signalisation même, et établit de toute façon le début et la fin de l'état d'inhabilitation de l'UID associé au mot de passe indépendamment du terminal radiomobile duquel est transmise la même demande de connexion.

La demande de connexion indiquée ci-dessus ne détermine aucune autre action en dehors d'une phase de déconnexion singulière, amorcée dans le cas de la commande d'inhabilitation reçue par la DIU en condition de connexion après la condition de suspension de l'UID associé au mot de passe, tandis que les signalisations de réplique de déconnexion et d'initialisation reçues par la DIU en condition de suspension dans l'état d'inhabilitation de l'UID amorcent une phase de déconnexion isolée.

L'inhabilitation implique l'initialisation de toutes les fonctions de données.

La touche de connexion de l'appareil radiomobile peut être rendue virtuelle au moyen d'une commande spécifique de connexion envoyée par l'opérateur du PC radio pour conditionner le même appareil radiomobile à transmettre la demande de connexion.

### 7. DESCRIPTION DES PROCEDURES DE LIEN

Les signalisations de transmission et de fin de transmission déterminent le début et la fin de la condition de transmission; la transmission est définie dans la RIU et dans le PC radio-appareil radiomobile pour le flux de données INB, tandis que pour le flux de données OUTB la transmission est définie aussi bien dans la DIU et dans l'IM-D que dans l'IM-R et dans la RIU.

En présence de messages OUTB de poste électronique, le respectif flux de données est inséré après le déliement, jusqu'au dénouement.

En absence de messages OUTB de poste électronique les signalisations de déliement et de dénouement sont conjointes.

Les transmissions des flux de données INB sont internes au déblocage.

Le contact et le déliement sont transmis en correspondance de transmissions de flux de données OUTB, tandis que les transmissions restantes des flux de données OUTB sont internes au déblocage.

Les signalisations d'envoi, de remise et de livraison sont reliées à l'élaboration des touches insérées (keystrokes) dans la mémoire tampon (buffer) (des touches) du PC radio.

L'élaboration des touches advient seulement en condition de déblocage et peut être aussi bien effectué exclusivement par le PC radio que répartie entre le PC radio et la DIU.

L'envoi et la remise transfèrent les touches en manière bidirectionnelle, respectivement du PC radio à la DIU et de la DIU au PC radio, quand l'élaboration débute dans la DIU et termine dans le PC radio.

La livraison transfère les touches en manière monodirectionnelle, du PC radio à la DIU, quand l'élaboration débute dans le PC radio et termine dans la DIU.

L'envoi est transmis par le PC radio quand la touche courante est une touche d'insertion (printable key) en condition de blocage comme aussi quand la touche courante est la touche de demande de système (system request key) aussi bien en condition de blocage qu'en condition de déblocage quand la même touche ne peut être élaborée exclusivement par le PC radio.

Les touches de local editing sont élaborées exclusivement par le PC radio.

La remise est transmise par la DIU en condition de déblocage.

La livraison est transmise par le PC radio quand la touche courante est la touche d'entrée (enter key), comme aussi quand la touche courante est la touche d'attention (attention key), dans les deux cas en condition de déblocage quand les touches mêmes ne peuvent pas être élaborées exclusivement par le PC radio; en condition de blocage les touches en question sont écartées.

Les touches fonction (function keys) sont égalisées à la séquence d'une touche d'insertion et de la touche d'entrée.

Quand elle doit être transférée en manière bidirectionnelle, après l'envoi la touche de demande de système reste dans la mémoire tampon jusqu'à la remise , qui en détermine l'extraction de la même mémoire tampon; tandis que la touche d'insertion courante est extraite de la mémoire tampon tant que la touche successive est une touche d'insertion et jusqu'au contact; quand la touche successive n'est pas une touche d'insertion ou bien après le contact non simultané avec la remise, la touche d'insertion courante reste dans la mémoire tampon jusqu'à la remise, qui en détermine l'extraction de la même mémoire tampon (comme il advient dans le cas de la remise simultanée avec le contact).

En effet dans le cas des touches d'insertion, en correspondance de l'envoi l'espace de présentation (presentation space) de travail initialise un espace de présentation de prolongement qui est utilisé avec les touches d'insertion extraites de la mémoire tampon tant que la touche successive est une touche d'insertion et jusqu'au contact; en correspondance de cette signalisation l'espace de présentation de prolongement ajourne ou non l'espace de présentation de travail respectivement selon que les indicateurs d'inhibition d'insertion (input inhibit) et d'entrée (enter inhibit) résultent abaissés ou bien levés (OFF ou bien ON); après le contact est utilisé l'espace de présentation de travail.

Si le PC radio reçoit un lien non simultané avec le contact après l'envoi et avant le contact, le contexte relatif à l'espace de présentation de prolongement est suspendu pour consentir le déroulement du lien en question et est rétabli à la fin du lien même.

La DIU élabore les signalisations d'envoi et de livraison reçues des PC radio et les flux de données OUTB reçus des systèmes informatiques; dans la DIU existent, pour chaque système aussi bien informatique que de poste électronique assigné à chaque DFID, une mémoire tampon des touches , où sont insérées les signalisations d'envoi et de livraison (et les flux de données INB), et une mémoire tampon des données, où sont insérés les flux de données OUTB.

Quand la DIU extrait de la mémoire tampon des touches une livraison, la signalisation est élaborée ou bien écartée respectivement dans les cas de condition de déblocage et de blocage.

Dans le cas de l'envoi, comme aussi dans le cas du flux de données OUTB, on doit distinguer le cas d'absence de la condition de lien et le cas de présence de cette condition; en outre, en présence de la condition de lien, on doit ultérieurement distinguer le cas dans lequel le lien est en condition de blocage et le cas dans lequel le lien est en condition de déblocage.

### ENVOI EN ABSENCE DE LIEN

Quand la DIU extrait de la mémoire tampon des touches un envoi et n'existe pas le lien pour l'UID et le DFID correspondants, le message de 25ème ligne conséquent à l'élaboration de la touche est inséré dans la queue de transmission trunking, précédé de la signalisation de lien et suivi de la signalisation conjointe de contact et de remise, tandis que la même DIU transmet à l'IM-D la demande de transmission.

L'IM-D insère la demande de transmission dans la queue des tours de transmission; quand l'IM-D sert cette signalisation, il transmet à la DIU la transmission.

Quand elle reçoit la transmission, la DIU extrait de la queue de transmission trunking et transmet à l'IM-D le message de 25ème ligne avec la signalisation de lien et avec la signalisation conjointe de contact et de remise, que le même IM-D achemine sur le SVC; au terme de la transmission, la DIU transmet à l'IM-D la fin de transmission qui détermine dans le même IM-D la conclusion du service de la demande de transmission.

Quand il reçoit le message de 25ème ligne avec la signalisation de lien et avec la signalisation conjointe de contact et de remise, l'IM-R insère dans la queue de transmission trunking le message de 25ème ligne avec la signalisation conjointe de contact et de remise et transmet à la RIU la demande de transmission conjointe avec le lien.

La RIU insère l'enregistrement de lien, avec le flag de lien simultané avec le contact levé, dans la fiche de connexion et transmet le lien sur le canal de contrôle, tandis que la demande de transmission est insérée avec la marque de masquage dans la queue des tours de transmission du canal de données choisi pour le lien.

Quand elle reçoit l'accusé de réception, ack (acknowledgment) du lien, la RIU est conditionnée par le flag de lien simultané avec le contact levé dans l'enregistrement de lien de la fiche de connexion à ôter la marque de masquage de la demande de transmission insérée dans la queue des tours de transmission.

Quand la RIU sert la demande de transmission, elle transmet à l'IM-R la transmission.

Quand il reçoit la transmission, l'IM-R extrait de la queue de transmission trunking et transmet à la RIU le message de 25ème ligne avec la signalisation conjointe de contact et de remise, que la même RIU transmet sur le canal de données au PC radio; au terme de la transmission, l'IM-R transmet à la RIU la fin de transmission, qui détermine dans la même RIU la conclusion du service de la demande de transmission.

### ENVOI EN PRESENCE DE LIEN EN CONDITION DE BLOCAGE

Quand la DIU extrait de la mémoire tampon des touches un envoi et existe un lien en condition de blocage pour l'UID et le DFID correspondants, le message de 25ème ligne correspondant à l'élaboration de la touche est inséré dans la queue de transmission trunking, suivi de la signalisation conjointe de contact et de remise, tandis que la même DIU transmet à l'IM-D la demande de transmission.

L'IM-D insère la demande de transmission dans la queue des tours de transmission; quand l'IM-D sert cette signalisation, transmet à la DIU la transmission.

Quand elle reçoit la transmission, la DIU extrait de la queue de transmission trunking et transmet à l'IM-D le message de 25ème ligne avec la signalisation conjointe de contact et de remise, que le même IM-D achemine sur le SVC; au terme de la transmission la DIU transmet à l'IM-D la fin de transmission, qui détermine dans le même IM-D la conclusion du service de la demande de transmission.

Quand il reçoit le message de 25ème ligne avec la signalisation conjointe de contact et de remise , l'IM-R l'insère dans la queue de transmission trunking et transmet à la RIU la demande de transmission.

La RIU insère la demande de transmission dans la queue des tours de transmission du canal de données identifié dans l'enregistrement de lien de la fiche de connexion correspondant à l'UID et au DFID indiqués par la même demande de transmission.

Quand la RIU sert la demande de transmission, elle transmet à l'IM-R la transmission.

Quand il reçoit la transmission, l'IM-R extrait de la queue de transmission trunking et transmet à la RIU le message de 25ème ligne avec la signalisation conjointe de contact et de remise, que la même RIU transmet sur le canal de données au PC radio; au terme de la transmission l'IM-R transmet à la RIU la fin de transmission, qui détermine dans la même RIU la conclusion du service de la demande de transmission.

### ENVOI EN PRESENCE DE LIEN EN CONDITION DE DEBLOCAGE

Ce cas procède comme le cas précédent, avec la seule différence qu'au lieu de la signalisation conjointe de contact et de remise existe seulement la signalisation de remise.

### FLUX DE DONNEES OUTB EN ABSENCE DE LIEN

Quand la DIU extrait de la mémoire tampon des données un flux de données OUTB et n'existe pas le lien pour l'UID et le DFID correspondants, est mis hors de service le terminal virtuel et le flux de données OUTB est élaboré conformément à cette condition, tandis que la même DIU transmet à l'IM-D la signalisation de lien.

Quand il reçoit le lien, l'IM-D achemine la signalisation sur le SVC.

Quand il reçoit le lien, l'IM-R transmet la signalisation à la RIU.

La RIU insère l'enregistrement de lien avec le flag de lien simultané avec le contact abaissé dans la fiche de connexion et transmet le lien sur le canal de contrôle.

Quand elle reçoit l'accusé de réception du lien, la RIU est conditionnée par le flag de lien simultané avec le contact abaissé dans l'enregistrement de lien de la fiche de connexion à transmettre à l'IM-R la signalisation de confirmation de lien.

Quand il reçoit la confirmation de lien, l'IM-R achemine la signalisation sur le SVC.

Quand il reçoit la confirmation de lien, l'IM-D transmet la signalisation à la DIU.

Quand elle reçoit la confirmation de lien, la DIU met en service le terminal virtuel.

### FLUX DE DONNEES OUTB EN PRESENCE DE LIEN EN CONDITION DE BLOCAGE.

Quand la DIU extrait de la mémoire tampon des données un flux de données OUTB et existe un lien en condition de blocage pour l'UID et le DFID correspondants, le message de 25ème ligne conséquent à l'élaboration du flux de données OUTB et le même flux de données OUTB sont insérés dans l'ordre dans la queue de transmission trunking, séparés par la signalisation de contact, tandis que la même DIU transmet à l'IM-D la demande de transmission.

L'IM-D insère la demande de transmission dans la queue des tours de transmission; quand l'IM-D sert cette signalisation, il transmet à la DIU la transmission.

Quand elle reçoit la transmission, la DIU extrait de la queue de transmission trunking et transmet à l'IM-D le message de 25ème ligne et le flux de données OUTB avec la signalisation de contact, que le même IM-D transmet sur le SVC; au terme de la transmission la DIU transmet à l'IM-D la fin de transmission, qui détermine dans le même IM-D la conclusion du service de la demande de transmission.

Quand il reçoit le message de 25ème ligne et le flux de données OUTB avec la signalisation de contact, l'IM-R l'insère dans la queue de transmission trunking et transmet à la RIU la demande de transmission.

La RIU insère la demande de transmission dans la queue des tours de transmission du canal de données identifié dans l'enregistrement de lien de la fiche de connexion correspondant à l'UID et au DFID indiqués par la même demande de transmission.

Quand la RIU sert la demande de transmission, elle transmet à l'IM-R la transmission.

Quand il reçoit la transmission, l'IM-R extrait de la queue de transmission trunking et transmet à la RIU le message de 25ème ligne et le flux de données OUTB avec la signalisation de contact, que la même RIU transmet sur le canal de données au PC radio; au terme de la transmission, l'IM-R transmet à la RIU la fin de transmission, qui détermine dans la même RIU la conclusion du service de la demande de transmission.

### FLUX DE DONNEES OUTB EN PRESENCE DE LIEN EN CONDITION DE DEBLOCAGE

Ce cas procède comme le cas précédent, avec la seule différence que le message de 25ème ligne et le flux de données OUTB ne sont pas séparés par la signalisation de contact.

### FLUX DE DONNEES INB (INCLUS LES MESSAGES INB DE POSTE ELECTRONIQUE)

Le flux de données INB est transmis en conséquence de la signalisation de livraison, quand la touche d'entrée ne peut être élaborée exclusivement par le PC radio; la livraison est transmise conjointement à la demande de transmission du PC radio-appareil radiomobile à la RIU.

Quand elle reçoit la signalisation conjointe de livraison et de demande de transmission, la RIU transmet la livraison à l'IM-R et insère la demande de transmission dans la queue des tours de transmission du canal de données identifié dans l'enregistrement de lien de la fiche de connexion correspondant à l'UID et au DFID indiqués par la même demande de transmission.

Quand la RIU sert la demande de transmission, elle transmet au PC radio la transmission.

Quand il reçoit la transmission, le PC radio transmet sur le canal de données à la RIU le flux de données INB, que la même RIU transmet à l'IM-R; au terme de la transmission le PC radio transmet à la RIU la fin de transmission, qui détermine dans la même RIU la conclusion du service de la demande de transmission.

Quand il reçoit le flux de données INB, l'IM-R l'achemine sur le SVC.

Quand il reçoit le flux de données INB, l'IM-D le transmet à la DIU.

### DELIEMENT ET DENOUEMENT (ET MESSAGES OUTB DE POSTE ELECTRONIQUE)

Le déliement est transmis par la DIU à la conclusion de l'unité de travail correspondante au lien, quand la session retourne à la condition de repos; pour l'architecture de réseau IBM la condition de repos coïncide avec l'état de contention (contention state).

Quand la session retourne à la condition de repos, la DIU insère dans la queue de transmission trunking le message de 25ème ligne conséquent à l'élaboration de la même condition de repos et l'éventuel flux de données OUTB qui conclut l'unité de travail, suivis de la signalisation de déliement, et transmet à l'IM-D la demande de transmission.

Ce cas procède ensuite comme le cas du flux de données OUTB en présence de lien en condition de déblocage, avec la différence que le message de 25ème ligne et l'éventuel flux de données OUTB sont suivis de la signalisation de déliement.

Quand n'existent pas de messages OUTB de poste électronique, la signalisation de déliement est conjointe avec la signalisation de dénouement.

Quand existent des messages OUTB de poste électronique, ceux-ci sont ajoutés au message de 25ème ligne et à l'éventuel flux de données OUTB après le déliement et avant le dénouement, dans une unique transmission.

### OUVERTURE ET CLOTURE DE LA SESSION DE TRAVAIL

Avec référence à la distinction entre la session de travail, avec le moniteur transactionnel, et la session de service, avec le point de contrôle, dans le cas des systèmes informatiques centralisés avec accès basé sur concentrateur, la clôture de la session de travail (UNBIND) a effet seulement si la même session de travail a la possession du terminal virtuel, quand existe un lien en condition de déblocage, conditionnant la DIU à la transmission du déliement avec le message de 25ème ligne, sans flux de données OUTB.

L'ouverture de la session de travail (BIND) présente trois 'cas, correspondants à l'absence de lien, à la présence de lien en condition de blocage et à la présence de lien en condition de déblocage; ces trois cas procèdent comme les analogues cas relatifs au flux de donnée OUTB, avec la seule différence qu'au lieu du message de 25ème ligne et du flux de données OUTB existe seulement le message de 25ème ligne.

### SEGMENTATION ET RECOMPOSITION

Quand un flux de données OUTB ou bien un message OUTB de poste électronique ajouté au message de 25ème ligne et à l'éventuel flux de données OUTB dépasse la longueur maximale d'un paquet du réseau de données, l'IM-D segmente la relative transmission en une série de paquets qui sont acheminés individuellement sur le SVC; pour transmettre à la RIU la demande de transmission éventuellement conjointe avec le lien simultané avec le contact, l'IM-R attend la signalisation de fin du flux de données, éventuellement conjointe avec le lien non simultané avec le contact (recomposition); ensuite il transmet à la RIU l'éventuel lien non simultané avec le contact.

Quand un flux de données INB ou bien un message INB de poste électronique dépasse la longueur maximale d'un paquet de données du réseau de données, l'IM-R effectue la segmentation tandis que l'IM-D ne recompose pas les paquets de la transmission.

### 8. VERSION DU SYSTEME TRANSPARENTE AU RÉSEAU DE DONNÉES ET A LA MAILLE RADIO

La première version du système décrite au chapitre 3 ne résulte pas transparente au réseau de données pour la présence dans les noeuds de ce réseau des géreurs d'interface, IM-D et IM-R.

Le même système consent toutefois une version transparente au réseau de données, décrite dans ce chapitre, obtenue de la première version en déplaçant les géreurs d'interface, IM-D et

IM-R, des noeuds du même réseau de données respectivement dans le serveur de communication et dans le contrôleur de réseau radio suivant le schéma de la Figure 2.

Dans cette version le serveur de communication est doté d'un software de communication approprié qui implémente les procédures développées dans la première version par la combinaison de la DIU et de l'IM-D; pareillement le contrôleur de réseau radio est doté d'un software de communication approprié qui implémente les procédures développées dans la première version par la combinaison de l'IM-R et de la RIU.

Comme la première version, la version transparente au réseau de données limite le fonctionnement des systèmes informatiques centralisés aux services de type EDP, et utilise la même implémentation des architectures de réseau avec la même organisation des interfaces et des procédures décrites dans les chapitres précédents, compte tenu justement du déplacement indiqué ci-dessus des géreurs d'interface IM-D et IM-R et de leur combinaison respectivement avec la DIU et avec la RIU.

Cette version utilise une variante de la technique conventionnelle de transmission à commutation de paquet qui fait correspondre une unique liaison logique pour toutes les sessions sur l'interface entre le serveur de communication et le contrôleur de réseau radio, constitué par un circuit virtuel commué entre ces deux unités, et une liaison logique pour chaque unité de travail de chaque session sur l'interface entre le contrôleur de réseau radio et le PC portatif-terminal radiomobile.

Si la technique conventionnelle de transmission à commutation de paquets garantit le recouvrement des données en cours de transmission durant le changement de cellule pour les réacheminer de la cellule précédente à la suivante, la variante en question peut utiliser le même procédé pour atteindre la permanence des sessions même sans la condition indiquée pour les trois cas énumérés au chapitre 1, dans le limites justement du premier cas.

Avec référence aux réseaux de données qui adoptent l'interface X.25, et désignant pour abréger interface de données celle entre le serveur de communication et le noeud du réseau de données, et interface radio celle entre le contrôleur de réseau radio et le noeud du réseau de données, la version transparente applique la correspondance suivante entre les signalisations relatives aux procédures de connexion et les paquets qui instaurent et abattent le circuit virtuel commué.

### PHASE DE CONNEXION-DECONNEXION

- Demande de connexion: = call request sur l'interface radio
= incoming call sur l'interface de données
- Réplique de déconnexion: = clear request sur l'interface radio
= clear indication sur l'interface de données
- Connexion: = call accepted sur l'interface de données
= call connected sur l'interface radio

### PHASE DE CONNEXION SINGULIERE

Comme ci-dessus, demande de connexion et connexion

### PHASE DE CONNEXION ISOLEE

Demande de connexion : comme ci-dessus
- Déconnexion sans réplique: = clear request sur l'interface de données
= clear indication sur l'interface radio

### PHASE DE DECONNEXION SINGULIERE

Comme ci-dessus, réplique de déconnexion

### PHASE DE DECONNEXION ISOLEE

Déconnexion sans réplique : comme ci-dessus

Pour gérer correctement ces correspondances, le software de communication du serveur de communication et le software de communication du contrôleur de réseau radio doivent pouvoir distinguer avec un flag opportun les paquets de call accepted et de call connected qui correspondent à la connexion avec initialisation et à la connexion sans initialisation, dans le but respectivement de faire suivre ou non ces paquets par les signalisations d'initialisation ou bien d'extraction; ces signalisations sont en effet transmises dans le cas de la signalisation de connexion avec initialisation, à la suite respectivement de la réception ou non de l'accusé de réception de la même signalisation transmise du software de communication du contrôleur de réseau radio au PC portatif-terminal radiomobile.

Les champs du format des paquets de clear request et clear indication dédiés aux fonctions de données correspondantes aux liens enlevés pour être abolis oui bien répétés dans la phase de déconnexion, comme aussi les champs du format des paquets de call accepted et de call connected dédiés aux fonctions de données à initialiser dans la connexion avec initialisation, doivent être définis dans le champ facilities du format des paquets en question.

Dans le cas des réseaux radiomobiles publics numériques conçus pour la seule radiotéléphonie la transparence à la maille radio s'obtient en extrayant les deux éléments software combinés, IM-R et RIU, du contrôleur du réseau radio (MSC) et en les implémentant dans une unité hardware séparée, reliée aussi bien au noeud du réseau de données qu'aux stations radio de base, en contournant le même contrôleur de réseau radio.

Dans ce cas, le schéma est le même que celui de la Figure 2, avec comme seule différence la substitution du libellé : CONTROLEUR DE RESEAU RADIO par le libellé: UNITE HARDWARE SEPAREE.

Dans le cas du GPRS l'unité hardware séparée est constituée par le SGSN-serving GPRS support node.

Dans le réseau GSM cette unité hardware séparée se relie au noeud du réseau GPRS backbone et aux BSC; l'interface radio indiqué ci-dessus devient celle entre l'unité hardware séparée et le noeud du réseau GPRS backbone.

Sur l'interface entre l'unité hardware séparée et le BSC/PC portatif-terminal radiomobile la version transparente à la maille radio applique la correspondance suivante entre les signalisations relatives aux procédures de lien et les paquets qui instaurent et abattent le SVC, toujours dans le cas de l'interface X.25.
Demande de connexion, envoi, livraison ,interruption et fin d'interruption=call request
- Réplique au call request: =clear indication; correspondant, quand c'est le cas, au rappel de connexion ou bien à la connexion, avec ou sans initialisation.
- Lien: = incoming call
- Réplique à l'incoming call: = call accepted, dans le cas d'accusé de réception du lien
= clear request, dans le cas du manque de l'accusé de réception du lien
- Dénouement: = clear indication
- Réplique au clear indication: = clear request , dans le cas du manque de l'accusé de réception de la signalisation

En outre le clear indication est transmis à la réception de la déconnexion avec réplique, quand il existe un lien en cours d'exécution pour le PC radio impliqué.

Enfin, avec référence à la distinction dans la DIU entre les procédures de connexion, les procédures de lien pour le système de poste électronique et les procédures de lien pour chacun des systèmes informatiques, le serveur de communication peut être subdivisé en deux unités hardware, une publique et une privée, reliées entre elles; les procédures de connexion, les procédures de lien pour le système de poste électronique et les procédures de lien pour l'architecture de réseau TCP/IP, implémentées dans l'unité hardware publique ainsi que l'IM-D, permettent à cette unité l'accès à internet; les procédures de lien pour les systèmes informatiques de la société, comme par exemple les procédures de lien pour l'architecture de réseau client-server et les procédures de lien pour le système informatique d'IBM, implémentées dans l'unité hardware privée, permettent à cette unité l'accès aux systèmes informatiques correspondants; dans le cas du GPRS, l'unité hardware publique est constituée par le GGSN-gateway GPRS support node.

### OBSERVATION FINALE

Le système consent le recouvrement des erreurs de transmission de l'IM-R au PC radio au moyen de la mémorisation pour un temps déterminé dans un buffer de recouvrement de la DIU des flux de données OUTB transmis à l'intérieur des liens assignés aux fonctions de données relatives aux sessions établies pour les systèmes informatiques, par une nouvelle connexion.
La DIU élimine de l'initialisation dans le paquet de connexion la fonction de données correspondante au lien avec flux de données OUTB éventuellement mémorisé dans le buffer de recouvrement, et transmet à l'IM-D comme demande de transmission le même flux de données inséré dans la queue de transmission trunking à partir du point précédemment indiqué au moyen des signalisations de demande d'enlèvement et d'enlèvement, en ajoutant dans la partie transmise du même flux de données la signalisation de lien, au cas où cette signalisation ne serait pas incluse dans la transmission en question.

Le recouvrement des erreurs de transmission du PC radio à l'IM-R est permis au moyen d'une commande spécifique de transmission envoyée par l'opérateur du PC radio pour conditionner l'appareil radiomobile à transmettre la demande de transmission.

Si les systèmes conventionnels atteignent le recouvrement des erreurs de transmission sur le parcours radiomobile en utilisant le même procédé qui garantit le recouvrement des données en cours de transmission durant le changement de cellulle, la version du système décrite au chapitre 8, en utilisant le procédé des mêmes systèmes conventionnels qui garantit le recouvrement des données en cours de transmission durant le changement de cellule, atteint également le recouvrement des erreurs de transmission sur le parcours radiomobile.

## Revendications

1. Système de communication de données sur les réseaux radiomobiles publics numériques, comme par exemple le réseau GSM, dans lequel le contrôleur de réseau radio, radio network controller, correspond au centre de commutation mobile, MSC - Mobile Switching Centre, tandis que la station radio de base, radio base station, correspond au système de station de base, BSS - Base Station System, constitué par l'ensemble du contrôleur de station de base, BSC - Base Station Controller, et de la station de base d'émetteur-récepteur, BTS - Base Transceiver Station, et dans lequel l'ensemble du PC radio et de l'appareil radiomobile correspond à la station mobile, MS - Mobile Station;
le système est apte à permettre l'intégration d'un PC portatif relié au terminal radiomobile avec les architectures de réseau pour les systèmes informatiques aussi bien centralisés, par exemple ceux d'IBM et de Bull, que distribués, par exemple ceux sur les architectures TCP/IP, pour l'accès à internet, et client-server, comme aussi avec les architectures de réseau pour les systèmes de poste électronique;
le système est caractérisé aussi par le fait d'être spécifié sur la base de la description des procédures développées par les éléments qui le constituent et par la description des interfaces entre ces mêmes éléments;
en outre le système est apte à visualiser sur l'écran du PC portatif les temps dans lesquels l'opérateur peut mettre hors de service le terminal radiomobile, comme aussi les temps dans lesquels il peut mettre hors de service le même PC ou bien le déconnecter du terminal radiomobile ou bien encore le faire opérer en mode "stand-alone", avec la garantie pendant ces conditions de la permanence des sessions établies avec les systèmes informatiques centralisés avec accès basé sur concentrateur;
enfin le système est apte à permettre le recouvrement des transmissions des flux de données outbound non sollicités interrompues à l'insu de l'opérateur quand il se produit une erreur de transmission sur le parcours radiomdbile pendant que le PC portatif, comme aussi le terminal radiomobile, est mis en service, qu'il est connecté au même terminal radiomobile et qu'il n'est pas fait opérer en mode «stand - alone», au moyen d'une procédure de recouvrement en utilisant une mémorisation à temps déterminé des flux de données outbound des systèmes informatiques.

2. Système de communication de données selon la première revendication **caractérisé par** les éléments qui le constituent, quelques-uns internes et d'autres externes à l'infrastructure, constituée par le réseau radiomobile et par le réseau de données, à commutation de paquets ou bien frame relay, entre eux interconnectés; la configuration des éléments en question est déterminée avec référence à une version du même système non transparente au réseau de données et à deux versions transparentes au réseau de données et à la maille radio définies ci-dessous:
A) VERSION NON TRANSPARENTE AU RESEAU DE DONNEES utilisée pour spécifier les procédures développées par les éléments qui constituent le système et les interfaces entre ces mêmes éléments, dans laquelle les éléments internes à l'infrastructure sont les suivants:
*) unité d'interaction radio, RIU - Radio Interworking Unit, intégrée dans le contrôleur de réseau radio relié au noeud du réseau de données fixe qui intègre le géreur d'interface côté RIU et constituée par un module software spécifique résidant sur la carte de communication dans le même contrôleur de réseau radio, qui implémente les procédures de cet élément;
*) géreur d'interface côté RIU, IM-R - Interface Manager side RIU, intégré dans le noeud du réseau de données fixe relié au contrôleur de réseau radio et constitué par un module software spécifique résidant sur la carte de communication dans le même noeud du réseau de données, qui implémente les procédures de cet élément;
*) géreur d'interface côté DIU, IM-D - Interface Manager side DIU, intégré dans le noeud du réseau de données fixe prédisposé pour liaison à l'unité d'interaction de données et constitué par un module software spécifique résidant sur la carte de communication dans le même noeud du réseau de données, qui implémente les procédures de cet élément; et dans laquelle les éléments externes à l'infrastructure sont les suivants:
*) PC radio, constitué par un PC portatif prédisposé pour la liaison à l'appareil radiomobile et par un module software spécifique résidant dans le même PC portatif, qui implémente les procédures de cet élément;
*) appareil radiomobile, mobile radio set, constitué par un terminal radiomobile prédisposé pour la liaison au PC radio, et par un module software spécifique résidant sur la carte du même terminal radiomobile, qui implémente les procédures de cet élément;
*) unité d'interaction de données, DIU - Data Interworking Unit, dans les locaux de l'usager, constitué par un serveur de communication prédisposé pour la liaison au noeud du réseau de données fixe qui intègre le géreur d'interface côté DIU, et par un module software spécifique résidant dans le même serveur de communication, qui implémente les procédures de cet élément; pour permettre à l'unité d'interaction des données d'interfacer le système aux architectures de réseau, le serveur de communication est prédisposé pour les liaisons du type LAN, par exemple Token Ring, Ethernet, et du type WAN, par exemple SDLC, QLLC, HDLC, X.25, demandées par les architectures de réseau interfacées;
B) VERSION TRANSPARENTE AU RESEAU DE DONNEES, dans le cas des réseaux radiomobiles publics numériques avec services intégrés de phonie et de données, déduite de la version non transparente au même réseau en déplaçant les géreurs d'interface, IM-D et IM-R, des noeuds du même réseau respectivement dans le serveur de communication et dans le contrôleur de réseau radio et en combinant l'IM-D avec la DIU et l'IM-R avec la RIU;
C) VERSION TRANSPARENTE A LA MAILLE RADIO, dans le cas des réseaux radiomobiles publics numériques conçus pour la seule radiotéléphonie, déduite de la version transparente au réseau de données en déplaçant les éléments software combinés IM-R et RIU du contrôleur de réseau radio à une unité hardware séparée reliée, dans le cas du réseau GSM, au noeud du réseau de données GPRS backbone et aux contrôleurs de station de base BSC, en contournant le même,contrôleur de réseau radio MSC.

3. Système de communication de données selon les premières deux revendications **caractérisé par** les interfaces suivantes entre les éléments qui le constituent:
A) INTERFACE ENTRE LA DIU ET LE PC RADIO-APPAREIL RADIOMOBILE, définie par les signalisations suivantes échangées entre les deux éléments: Demande de connexion INB-CONN, Connexion avec initialisation OUTB-CS-CONN, Connexion sans initialisation OUTB-CS-CONN, Envoi INB-IMP, Remise OUTB-AS-IMP, Livraison INB-IMP, Lien OUTB-CS-IMP, Contact OUTB-AS-IMP, Dénouement OUTB-AS-IMP, Déliement OUTB-AS-IMP;
B) INTERFACE ENTRE LA DIU ET LA RIU, définie par les signalisations suivantes échangées entre les deux éléments: Enlèvement INB-CONN, Déconnexion avec réplique OUTB-CONN, Déconnexion sans réplique OUTB-CONN, Réplique de déconnexion INB-CONN, Initialisation INB-CONN, Extraction INB-CONN, Confirmation de lien INB-IMP;
C) INTERFACE ENTRE LA RIU ET LE PC RADIO-APPAREIL RADIOMOBILE, définie par les signalisations suivantes échangées entre les deux éléments: Interruption INB-CONN, Fin d'interruption INB-CONN, Demande de transmission INB-IMP, Transmission OUTB-AS-IMP, Fin de transmission INB-IMP, Rappel de connexion OUTB-CS-CONN;
D) INTERFACE ENTRE L'IM-R ET LE PC RADIO-APPAREIL RADIOMOBILE, définie par les signalisations suivantes échangées entre les deux éléments: Demande de connexion INB-CONN, Connexion sans initialisation OUTB-CS-CONN, Envoi INB-IMP, Rappel de connexion OUTB-CS-CONN, Livraison INB-IMP;
E) INTERFACE ENTRE L'IM-R ET LA RIU, définie par les signalisations suivantes échangées entre les deux éléments: Demande d'enlèvement OUTB-CONN, Demande de transmission OUTB-IMP, Transmission INB-IMP, Fin de transmission OUTB-IMP;
F) INTERFACE ENTRE LA DIU ET L'IM-D, définie par les signalisations suivantes échangées entre les deux éléments: Demande de transmission OUTB-IMP, Transmission INB-IMP, Fin de transmission OUTB-IMP;
G) INTERFACE ENTRE L'IM-D ET L'IM-R, définie par la signalisation de Fin du flux de données OUTB-IMP échangée entre les deux éléments;
ou les sigles INB, OUTB indiquent respectivement la transmission dans le sens du PC portatif à la DIU, inbound, et la transmission dans le sens contraire, outbound;
les sigles AS, CS établissent, en ce qui concerne le parcours radiomobile, s'il s'agit respectivement de signalisation associée ou bien de signalisation commune;
et les sigles CONN, IMP précisent si la signalisation se réfère respectivement au procédures de connexion ou bien aux procédures de lien.

4. Système de communication de données selon n'importe laquelle-des revendications précédentes caractérisé, en ce qui concerne les liaisons logiques et les structures de données, par les points suivants:
a) par une unique liaison logique pour toutes les sessions, dite connexion, sur le réseau de données et par une liaison logique pour chaque unité de travail de chaque session, dite lien, sur le réseau radiomobile;
b) par la subdivision du lien en deux parts, une interne délimitée par le contact et par le déliement, qui permet les transmissions bidirectionnelles inbound ed outbound, et une externe délimitée d'un côté par le lien et par le contact et de l'autre côté par le déliement et par le dénouement, qui permet seulement les transmissions monodirectionnelles outbound;
c) par l'introduction, dans le but de la distinction entre lien demandé par le PC portatif et lien demandé par les systèmes informatiques, du critère de lien respectivement simultané ou non avec le contact sur le réseau de données et du critère de contact respectivement conjoint ou non avec la remise sur le parcours radiomobile;
d) par la modalité de transmission des liens de la DIU à la RIU qui évite le dépassement d'un lien demandé par le PC portatif de la part d'un éventuel lien demandé par le système informatique de la même session;
e) par l'inclusion des unités de travail demandées par les systèmes de poste électronique dans les liens relatifs aux unités de travail demandées par le PC portatif ou bien par les systèmes informatiques;
f) au moyen de la constitution dans l'IM-D des enregistrements de connexion, et de l'introduction de la marque de suspension pour éventuellement contremarquer les mêmes enregistrements de connexion;
au moyen de la constitution dans la RIU des fiches de connexion avec les enregistrements de lien, et de l'introduction des marques d'enlèvement par abolition et par répétition, de la marque d'extraction et de la marque d'interruption pour éventuellement contremarquer les mêmes fiches de connexion;
au moyen de l'attribution à deux modules software différents, la DIU et l'IM-D d'un coté et l'IM-R et la RIU de l'autre coté, respectivement de la queue de transmission trunking et des queues des tours de transmission, scheduling queues;
au moyen de l'introduction de la marque de marquage pour éventuellement contremarquer les signalisations dans les queues des tours de transmission dans l'IM-D et dans la RIU et dans les queues de transmission des canaux de contrôle dans la RIU;
au moyen de la séparation entre queue de transmission des signalisations et queue de transmission des données dans la DIU, dans l'IM-D, dans l'IM-R et dans la RIU, la première avec priorité de service par rapport à la seconde.

5. Système de communication de données selon n'importe laquelle des revendications précédentes **caractérisé par** les répliques ou bien par les actions indiquées ci-dessous dans le cas des signalisations envoyées du PC portatif:
a) rappel de connexion ou bien aucune réplique, respectivement dans le cas de l'envoi ou bien de la livraison reçus par l'IM-R en absence de circuit virtuel commué, SVC;
b) rappel de connexion ou bien transmission à la DIU de l'enlèvement, dans le cas de la demande de transmission reçue par la RIU respectivement en absence ou bien en présence de SVC, dans le second cas sans correspondance de trame TDMA entre le canal de contrôle et le canal de données ;
c) connexion sans initialisation ou bien transmission à l'IM-D de la signalisation elle-même, dans le cas de la demande de connexion, respectivement sans ou bien avec le mot de passe d'habilitation/inhabilitation, reçue par l'IM-R en présence du SVC;
d) déconnexion avec réplique ou bien aucune réplique, dans le cas de la demande de connexion avec le mot de passe d'habilitation/inhabilitation pour la commande d'inhabilitation reçue par la DIU dans l'état d'habilitation, respectivement en présence ou bien en absence du SVC, dans le premier cas après la suspension pour l'issue de la connexion;
e) déconnexion avec réplique ou bien connexion, dans le cas de la demande de connexion sans le mot de passe d'habilitation/inhabilitation reçue par la DIU dans l'état d'habilitation, respectivement en présence ou bien en absence du SVC, dans le premier cas après la suspension pour l'issue de la connexion;
f) connexion ou bien déconnexion sans réplique, dans le cas de la réplique de déconnexion, ainsi qu'aucune réplique ou bien déconnexion sans réplique dans le cas de l'initialisation, les deux signalisations reçues par la DIU en présence de SVC pendant la suspension pour l'issue de la connexion, respectivement dans l'état d'habilitation ou bien dans l'état d'inhabilitation.

6. Système de communication de données selon n'importe laquelle des revendications précédentes **caractérisé par** la définition des phases d'instauration et d'abattement de la connexion indiquées ci-dessous, toutes - sauf la phase c - relatives à la condition de qualification au service de données dans l'état d'habilitation:
a) définition de la phase de connexion singulière, pour l'instauration de la connexion, au moyen de la séquence des signalisations de demande de connexion et de connexion;
b) définition de la phase de déconnexion singulière, pour l'abattement de la connexion à la suite du manque de l'accusé de réception de la signalisation de lien sur le parcours radiomobile ou à la suite d'erreurs de transmission sur le même parcours radiomobile, au moyen de la séquence des signalisations de déconnexion avec réplique et de réplique de déconnexion;
c) définition de la phase de connexion isolée, pour les PC portatifs reliés à des terminaux radiomobiles non qualifiés au service de données ou bien qualifiés au même service de données dans l'état de inhabilitation, au moyen de la séquence des signalisations de demande de connexion et de déconnexion sans réplique;
d) définition de la phase de déconnexion isolée, pour l'abattement de la connexion à la suite du manque de l'accusé de réception de la signalisation de connexion avec initialisation sur le parcours radiomobile, au moyen de la seule signalisation de déconnexion sans réplique;
e) définition de la phase de connexion externe - déconnexion interne, pour le ré-acheminement de la connexion, au moyen de la séquence des signalisations de demande de connexion, de déconnexion avec réplique, de réplique de déconnexion et de connexion.

7. Système de communication de données selon n'importe laquelle des revendications précédentes **caractérisé par** la détermination des sessions qui ne doivent pas être initialisées, sur la base de l'exclusion des sessions suivantes:
a) dans la DIU en phase de déconnexion singulière ou bien en absence de SVC, exclusion des sessions correspondantes aux liens demandés par le PC portatif;
b) dans la DIU en phase de déconnexion
singulière, exclusion des sessions correspondantes aux liens avec signalisation de lien dans la queue de transmission trunking;
c) dans la DIU en présence de SVC pendant la suspension pour l'issue de la connexion, exclusion des sessions correspondantes aux liens suspendus dans la queue des tours de transmission de l'IM-D, quand la suspension même termine à la suite du manque de l'accusé de réception de la signalisation de connexion avec initialisation sur le parcours radiomobile;
d) dans la RIU en phase de déconnexion
singulière, exclusion de la session correspondante au premier lien avec signalisation de lien transmise et avec accusé de réception de la signalisation même sur le parcours radiomobile;
e) dans la RIU en phase de déconnexion
singulière, exclusion des sessions correspondantes au premier lien avec signalisation de lien pas encore transmise
ou bien transmise et avec manque le l'accusé de réception de la signalisation même sur le parcours radiomobile, ainsi qu'aux liens successifs au premier, sur la base du critère de lien demandé par le PC portatif.

8. Système de communication de données selon n'importe laquelle des revendications précédentes **caractérisé par** les amorces des liens correspondants aux sessions qui ne doivent pas être initialisées, selon les points suivants:
a) au moyen de l'introduction, dans le but de la distinction entre lien demandé par le PC portatif et lien demandé par les systèmes informatiques, du critère de signalisation de lien respectivement conjointe ou non avec la signalisation de demande de transmission dans l'IM-R et dans la RIU;
b) au moyen de l'élaboration suivante dans la RIU de l'accusé de réception de la signalisation de lien sur le parcours radiomobile: avec levée de la marque de masquage de la signalisation de demande de transmission dans le cas de lien demandé par le PC portatif, et avec transmission à la DIU de la signalisation de confirmation de lien dans le cas de lien demandé par les systèmes informatiques;
c) au moyen du recouvrement des erreurs de transmission de l'IM-R au PC radio qui se produisent sur les flux de données outbound non sollicités, par la mémorisation pour un temps déterminé dans un buffer de recouvrement des flux de données outbound transmis à l'intérieur des liens assignés aux sessions établies pour les systèmes informatiques; et dans ce cas:
d) par une nouvelle connexion qui détermine la transmission du flux de données mémorisé dans le buffer de recouvrement à partir du point dans lequel s'était produit l'erreur de transmission, en ajoutant la signalisation de lien au cas où cette signalisation ne serait pas incluse dans la transmission en question.

9. Système de communication de données selon n'importe laquelle des revendications précédentes **caractérisé par** les élaborations suivantes des informations relatives au lien, signalisations et données:
A) POUR LES INFORMATIONS INBOUND:
a) élaboration dans le PC portatif des touches d'insertion et de la touche de demande de système avec les signalisations d'envoi et de remise;
b) élaboration dans le PC portatif de la touche d'entrée et de la touche d'attention avec la signalisation de livraison;
c) élaboration dans le PC portatif de l'espace de présentation de prolongement adjoint aux espaces de présentation de travail;
d) suspension du contexte relatif à l'espace de présentation de prolongement dans le cas de lien demandé par les systèmes informatiques reçu par le PC portatif après l'envoi et avant le contact et son rétablissement à la fin du lien même;
e) élaborations de l'envoi comme indiqué au chapitre 7 en termes de: absence de lien, présence de lien en condition de transmission monodirectionnelle, blocage, et présence de lien en condition de transmission bidirectionnelle, déblocage;
f) élaboration du flux de données inbound et des messages inbound de poste électronique, comme indiqué au chapitre 7;
B) POUR LES INFORMATIONS OUTBOUND:
a) élaborations du flux de données outbound et de l'ouverture de la session de travail comme indiqué au chapitre 7 en termes de: absence de lien, présence de lien en condition de transmission monodirectionnelle, blocage, et présence de lien en condition de transmission bidirectionnelle, déblocage;
b) élaborations des signalisations de déliement et de dénouement, et insertion entre ces signalisations des éventuels messages outbound de poste électronique, comme indiqué au chapitre 7;
c) élaboration de la clôture de la session de travail, comme indiqué au chapitre 7.

10. Système de communication de données selon n'importe laquelle des revendications précédentes **caractérisé par** les correspondances suivantes entre les signalisations relatives aux procédures de connexion ou de lien et les paquets X.25 qui instaurent et abattent le SVC, où la référence à l'interface X.25 consent l'utilisation d'un réseau de transport de type IP entre le serveur de communication et le contrôleur de réseau radio/l'unité hardware séparée et rend le système parfaitement conforme au standard GPRS du réseau GSM:
A) VERSION TRANSPARENTE AU RESEAU DE DONNEE, avec la correspondance suivante entre les signalisations relatives au procédures de connexion et les paquets X.25 qui instaurent et abattent le SVC:
Demande de connexion = call request sur l'interface radio
= incoming call sur l'interface de données;
Réplique de déconnexion = clear request sur l'interface radio
= clear indication sur l'interface de données;
Connexion = call accepted sur l'interface de données
= call connected sur l'interface radio;
Déconnexion sans réplique = clear request sur l'interface de données
= clear indication sur l'interface radio;
ou interface de données désigne celle entre le serveur de communication et le noud du réseau de données, et interface radio désigne celle entre le contrôleur de réseau radio et le noud du réseau de données;
B) VERSION TRANSPARENTE A LA MAILLE RADIO, avec la correspondance suivante entre les signalisations relatives aux procédures de lien et les paquets X.25 qui instaurent et abattent le SVC, sur l'interface entre l'unité hardware séparée et le BSC/PC portatif-terminal radiomobile:
Demande de connexion, envoi, livraison, interruption et fin d'interruption= call request;
Réplique au call request = clear indication; correspondant, quand c'est le cas, au rappel de connexion ou bien à la connexion, avec ou sans initialisation;
Lien = incoming call;
Réplique à l'incoming call = call accepted, dans le cas d'accusé de réception du lien
= clear request, dans le cas du manque de l'accusé de réception du lien;
Dénouement = clear indication;
Réplique au clear indication = clear request, dans le cas du manque de l'accusé de réception de la signalisation;
en outre le clear indication est transmis à la réception de la déconnexion avec réplique, quand existe un lien en cours d'exécution pour le PC radio impliqué;
enfin l'interface entre l'unité hardware séparée et le noeud du réseau de données GPRS backbone coincide avec l'interface radio de la version transparente au même réseau de données.

## Patentansprüche

1. Datakommunikationssystem auf digitalen öffentlichen Mobilfunknetzwerken, wie zum Beispiel das GSM - Netzwerk, in dem der Funknetzwerk - Controller, radio network controller, dem Mobilvermittlungszentrale, MSC - Mobile Switching Centre, entspricht, während die Basisfunkstation, Radio Base Station, dem Basisstationssystem, BBS - Base Station System, entspricht, das aus der Gesamtheit:
Basisstationscontroller, BSC - Base Station Controller, und
Sende - Empfangsbasisstation, BTS - Base Transceiver Station, bestehet; und in dem die Gesamtheit: Funk - PC und
Mobilfunkgerät der Mobilstation, MS - Mobile Station, entspricht;
das System ist so eingerichtet, dass es die Integration eines an einen Mobilfunkterminal angeschlossenen tragbaren PC mit den Netzwerkarchitekturen für Computersysteme erlaubt, seien diese zentralisiert, wie zum Beispiel die von IBM und Bull, oder verteilt, wie zum Beispiel die auf den Architekturen TCP/IP, für den Zugriff auf Internet, und client-server, sowie auch mit den Netzwerkarchitekturen für E-Mail Systeme;
das System ist auch durch die Tatsache gekennzeichnet, dass es auf der Grundlage der Beschreibung der Prozeduren, die von den Elementen ausgeführt werden, die es konstituieren, und durch die Beschreibung der Schnittstellen zwischen diesen besagten Elementen, spezifiziert ist;
darüber hinaus ist das System so eingerichtet, das es auf dem Bildschirm des tragbaren PC die Zeiten anzeigt, innerhalb den der Bediener den Mobilfunkterminal ausschalten kann, sowie auch die Zeiten, innerhalb den er den besagten PC ausschalten oder ihn von Mobilfunkterminal abtrennen oder auch ihn im "stand - alone" - Modus laufen lassen kann, mit der Gewährleistung, dass während dieser Bedingungen die mit den zentralisierten Computersystemen mit konzentrator - basiertem Zugriff festgelegten Sessionen permanent bleiben;
schliesslich ist das System so eingerichtet, dass es die Wiederherstellung der Übertragungen der nicht angemahnten Outbound - Datenflüssen erlaubt, die ohne Wissen des Bedieners unterbrochen werden - während der tragbare PC, sowie auch der Mobilfunkterminal, angeschaltet ist, an den besagten Mobilfunkterminal angeschlossen ist und nicht im "stand - alone" - Modus laufen gelassen wird - wenn sich ein Übertragungsfehler auf dem Mobilfunkweg ereignet und zwar anhand eines Wiederherstellungsverfahrens, das eine zeitlich begrenzte Speicherung der Outbound - Datenflüsse der Computersysteme benutzt.

2. Datakommunikationssystem gemäss dem ersten Anspruch, **gekennzeichnet durch** die Elemente , die es konstituieren, von denen einige intern und anderen extern zur Infrastruktur sind, bestehend aus dem Mobilfunknetzwerk und dem Datennetzwerk mit Paketvermittlung oder frame relay, die miteinander angeschlossen sind; die Konfiguration der besagten Elemente wird mit Bezug auf eine Version desselben Systems determiniert, die dem Datennetzwerk gegenüber nicht transparent ist und zwei Versionen, die dem Datennetzwerk und der Funkmasche gegenüber transparent sind und wie folgt definiert sind:
A) VERSION, DIE DEM DATENNETZWERK GEGENÜBER NICHT TRANSPARENT IST, die verwendet wird, um die Prozeduren, die von den Elementen ausgeführt werden, die das System bilden, und die Schnittstellen zwischen eben diesen Elementen zu spezifizieren, wobei die Elemente innerhalb der Infrastruktur die folgenden sind:
*) Funkinteraktionseinheit, RIU (Radio Interworking Unit), die integriert ist in den Funknetzwerk-Controller, der an den Knoten des festen Datennetzwerk angeschlossen ist, der den Schnittstellenverwalter Seite RIU integriert, und aus einem spezifischen Softwaremodul besteht, das auf der Kommunikationsplatine in besagtem Funknetzwerk - Controller resident ist und die Prozeduren dieses Elementes implementiert.
*) Schnittstellenverwalter Seite RIU, IM-R (Interface Manager side RIU), der integriert ist in den Knoten des festen Datennetzwerk, der an den Funknetzwerk - Controller angeschlossen ist, und aus einem spezifischen Softwaremodul besteht, das auf der Kommunikationsplatine in besagtem Knoten des festen Datennetzwerk resident ist und die Prozeduren dieses Elementes implementiert.
*) Schnittstellenverwalter Seite DIU, IM-D (Interface Manager side DIU), der integriert ist in den Knoten des festen Datennetzwerk, der mit einer Vorsehung für den Anschluss an die Dateninteraktionseinheit ausgestattet ist, und aus einem spezifischen Softwaremodul besteht, das auf der Kommunikationsplatine in besagtem Knoten des festen Datennetzwerk resident ist und die Prozeduren dieses Elementes implementiert;
und wobei die Elemente ausserhalb der Infrastruktur die folgenden sind:
*) Funk - PC, der aus einem tragbaren PC, der mit einer Vorsehung für den Anschluss an das Mobilfunkgerät ausgestattet ist, und aus einem spezifischen Softwaremodul besteht, das in besagtem Funk - PC resident ist und die Prozeduren dieses Elementes implementiert.
*) Mobilfunkgerät (mobile radio set), das aus einem Mobilfunkterminal, der mit einer Vorsehung für den Anschluss an den Funk - PC ausgestattet ist, und aus einem spezifischen Softwaremodul besteht, das auf der Platine des besagten Mobilfunkterminal resident ist und die Prozeduren dieses Elementes implementiert.
*) Dateninteraktionseinheit, DIU (Data Interworking Unit) in den Lokalen des Benutzers, die aus einem Kommunikationsserver mit einer Vorsehung für den Anschluss an den Knoten des festen Datennetzwerk ausgestattet ist, der den Schnittstellenverwalter Seite DIU integriert, und aus einem spezifischen Softwaremodul besteht, das in besagtem Kommunikationsserver resident ist und die Prozeduren dieses Elementes implementiert; um der Dateninteraktionseinheit zu erlauben, das System an die Netzwerkarchitekturen anzuschliessen, ist der Kommunikationsserver mit Vorsehungen für Anschlüsse vom Typ LAN (Token Ring, Ethernet) und vom Typ WAN (SDLC, QLLC, HDLC, X.25) ausgestattet, die für die anzuschliessenden Netzwerkarchitekturen erforderlich sind;
B) VERSION, DIE DEM DATENNETZWERK GEGENÜBER TRANSPARENT IST, im Fall von öffentlichen digitalen Mobilfunknetzwerken mit integriertem Stimm - und Datenbedienungen, abgeleitet von der dem besagten Netzwerk nicht transparenten Version, indem die Schnittstellenverwalter, IM-D und IM-R, von den Knoten des besagten Netzwerkes in den Kommunikationsserver beziehungsweise in den Funknetzwerk - Controller versetzt werden und der IM-D mit der DIU und der IM-R mit der RIU kombiniert werden;
C) VERSION, DIE DER FUNKMASCHE GEGENÜBER TRANSPARENT IST, im Fall von öffentlichen digitalen Mobilfunknetzwerken, die ausschliesslich für die Funktelefonie konzepiert wurden, abgeleitet von der dem Datennetzwerk transparenten Version, indem die kombinierten Software - Elemente IM-R und RIU vom Funknetzwerk - Controller in eine separate Hardware - Einheit versetzt werden, die im Falle des GSM - Netzwerkes an den Knoten des GPRS - backbone - Datennetzwerkes und an die Basisstation - Controller, BSC, angeschlossen ist, unter Umgehung des besagten Funknetzwerk - Controllers, MSC.

3. Datakommunikationssystem gemäss der beiden ersten Ansprüche, **gekennzeichnet durch** die folgenden Schnittstellen zwischen den Elementen, die es konstituieren:
A) SCHNITTSTELLE ZWISCHEN DER DIU UND DEM FUNK - PC / MOBILFUNKGERÄT, definiert **durch** die folgenden Signalisierungen, die zwischen den beiden Elementen ausgetauscht werden: INB - CONN Verbindungsanforderung, OUTB - CS - CONN Verbindung mit Initialisierung, OUTB - CS - CONN Verbindung ohne Initialisierung, INB - IMP Sendung, OUTB - AS - IMP Übergabe, INB - IMP Zustellung, OUTB - CS - IMP Band, OUTB - AS - IMP Kontakt, OUTB - AS - IMP Loslösung, OUTB - AS - IMP Abkoppelung;
B) SCHNITTSTELLE ZWISCHEN DER DIU UND DER RIU, definiert **durch** die folgenden Signalisierungen, die zwischen den beiden Elementen ausgetauscht werden: INB - CONN Beseitigung, OUTB - CONN Abtrennung mit Replik, OUTB - CONN Abtrennung ohne Replik, INB - CONN Replik der Abtrennung, INB - CONN Initialisierung, INB - CONN Extraktion, INB - IMP Bandbestätigung;
C) SCHNITTSTELLE ZWISCHEN DER RIU UND DEM FUNK - PC / MOBILFUNKGERÄT, definiert **durch** die folgenden Signalisierungen, die zwischen den beiden Elementen ausgetauscht werden: INB - CONN Unterbrechung, INB - CONN Ende der Unterbrechung, INB - IMP Übertragungsanforderung, OUTB - AS - IMP Übertragung, INB - IMP Ende der Übertragung, OUTB - CS - CONN Verbindungsrückruf;
D) SCHNITTSTELLE ZWISCHEN DEM IM-R UND DEM FUNK- PC / MOBILFUNKGERÄT, definiert **durch** die folgenden Signalisierungen, die zwischen den beiden Elementen ausgetauscht werden: INB - CONN Verbindungsanforderung, OUTB - CS - CONN Verbindung ohne Initialisierung, INB - IMP Sendung, OUTB - CS - CONN Verbindungsrückruf, INB - IMP Zustellung;
E) SCHNITTSTELLE ZWISCHEN DEM IM-R UND DER RIU, definiert **durch** die folgenden Signalisierungen, die zwischen den beiden Elementen ausgetauscht werden: OUTB - CONN Beseitigungsanforderung, OUTB - IMP Übertragungsanforderung, INB - IMP Übertragung, OUTB - IMP Ende der Übertragung;
F) SCHNITTSTELLE ZWISCHEN DER DIU UND DEM IM-D, definiert **durch** die folgenden Signalisierungen, die zwischen den beiden Elementen ausgetauscht werden: OUTB - IMP Übertragungsanforderung, INB - IMP Übertragung, OUTB - IMP Ende der Übertragung;
G) SCHNITTSTELLE ZWISCHEN DEM IM-D UND DEM IM-R, definiert **durch** die Signalisierung: OUTB - IMP Ende des Datenflusses, die zwischen den beiden Elementen ausgetauscht wird;
wobei die Akronyme INB, OUTB entsprechend die Übertragungen vom tragbaren PC zur DIU und die Übertragungen in der umgekehrter Richtung angeben;
die Akronyme AS, CS stellen, was den Mobilfunkweg anbelangt, fest, ob es sich entsprechend um eine assoziierte oder um eine gleiche Signalisierung handelt;
die Akronyme CONN und IMP präzisieren, ob die Signalisierung sich entsprechend auf eine Verbindungsprozedur oder auf eine Bandprozedur bezieht.

4. Datakommunikationssystem gemäss einem beliebigen der vorhergehenden Ansprüche, gekennzeichnet, hinsichtlich der logischen Verknüpfungen und der Datenstrukturen, durch folgende Merkmale:
a) eine einzige logische Verknüpfung für alle Sessionen, genannt Verbindung, auf dem Datennetzwerk und eine logische Verknüpfung für jede Arbeitseinheit von jeder einzelnen Session, genannt Band, auf dem Mobilfunknetzwerk;
b) die Unterteilung des Bandes in zwei Teile, einen internen, der vom Kontakt und von der Abkoppelung begrenzt ist und die Übertragungen in beide Richtungen, inbound und outbound, erlaubt, und einen externen, der auf der einen Seite vom Band und vom Kontakt und auf der anderen Seite von der Abkoppelung und von der Loslösung begrenzt ist, der nur die Übertragungen in eine Richtung, outbound, erlaubt;
c) die Einführung, zum Zweck der Unterscheidung zwischen einem vom tragbaren PC angeforderten Band und einem von den Computersystemen angeforderten Band, des Kriteriums des mit dem Kontakt simultanen beziehungsweise nicht simultanen Bandes auf dem Datennetzwerk und des Kriteriums des mit der Übergabe zusammengefügten beziehungsweise nicht zusammengefügten Kontaktes auf dem Mobilfunkweg;
d) die Modalität der Bandübertragung von der DIU zur RIU, die die Überholung des vom tragbaren PC angeforderten Bandes durch ein eventuelles vom Computersystem der gleichen Session angefordertes Band verhindert;
e) die Einbeziehung der von den E-Mail - Systemen angeforderten Arbeitseinheiten in den Bändern, die sich auf die von dem tragbaren PC oder von den Computersystemen angeforderten Arbeitseinheiten beziehen;
f) durch die Konstituierung in IM-D der Verbindungsregistrierungen, und die Einführung der Aufhebungsmarke um eventuell die besagten Verbindungsregistrierungen zu bezeichnen;
durch die Konstituierung in der RIU der Verbindungskarten mit den Bandregistrierungen, und die Einführung der Beseitigungsmarken zur Unterdrückung und zur Wiederholung, der Extraktionsmarke und der Unterbrechungsmarke, um eventuell die besagten Verbindungskarten zu bezeichnen;
dadurch dass den zwei unterschiedlichen Softwaremodulen, die DIU und der IM-D auf der einen Seite und der IM-D und die DIU auf der anderen Seite, entsprechend die transmission - trunking Warteschlange und die Warteschlangen der Übertragungsreihen, scheduling queues, zugeschrieben werden;
durch die Einführung der Maskierungsmarke um eventuell die Signalisierungen in den Warteschlangen der Übertragungsreihen im IM-D und in der RIU und in den Übertragungswarteschlangen der Kontrollkanäle in der RIU zu bezeichnen;
durch die Trennung zwischen der Übertragungswarteschlange der Signalisierungen und der Übertragungswarteschlange der Daten in der DIU, im IM-D, im IM-R und in der RIU, wobei die erste gegenüber der zweiten Priorität bei der Bedienung hat

5. Datakommunikationssystem gemäss einem beliebigen der vorhergehenden Ansprüche, **gekennzeichnet durch** die unten angegebenen Repliken oder Aktionen im Fall von Signalisierungen, die vom tragbaren PC gesendet werden:
a) Verbindungsrückruf oder keine Replik, im Fall der von der IM-R bei Nicht - Vorhandensein eines vermittelten virtuellen Schaltkreises, SVC, erhaltenen Sendung beziehungsweise Zustellung;
b) Verbindungsrückruf oder Übertragung an die DIU der Beseitigung, im Fall der Übertragungsanforderung, die von der RIU entsprechend bei Nicht - Vorhandensein oder Vorhandensein des SVC, erhalten wird, im zweiten Fall ohne TDMA - Frame - Übereinstimmung zwischen dem Kontrollkanal und dem Datenkanal;
c) Verbindung ohne Initialisierung oder Übertragung an den IM-D der besagten Signalisierung, im Fall der Verbindungsanforderung, ohne beziehungsweise mit Zulassungs- / Nicht - Zulassungspasswort, die vom IM-R bei Vorhandensein eines SVC erhalten wird;
d) Abtrennung mit Replik oder keine Replik, im Fall der Verbindungsanforderung mit Zulassungs - / Nicht - Zulassungspasswort für den Nicht - Zulassungsbefehl, die von der DIU im Zulassungszustand erhalten wird, bei Vorhandensein beziehungsweise Nicht - Vorhandensein des SVC, im ersten Fall nach der Aufhebung aufgrund des Ergebnisses der Verbindung;
e) Abtrennung mit Replik oder Verbindung, im Fall der Verbindungsanforderung ohne Zulassungs - / Nicht - Zulassungspasswort, die von der DIU im Zulassungszustand erhalten wird, bei Vorhandensein beziehungsweise Nicht - Vorhandensein des SVC, im ersten Fall nach der Aufhebung aufgrund des Ergebnisses der Verbindung;
f) Verbindung oder Abtrennung ohne Replik, im Fall der Replik der Abtrennung, sowie auch keine Replik oder Abtrennung ohne Replik im Fall der Initialisierung, wobei beide Signalisierungen von der DIU bei Vorhandensein des SVC während der Aufhebung aufgrund des Ergebnisses der Verbindung, im Zulassungs - beziehungsweise Nicht - Zulassungszustand erhalten werden.

6. Datakommunikationssystem gemäss einem beliebigen der vorhergehenden Ansprüche, **gekennzeichnet durch** die Definition der unten angegebenen Phasen, für den Aufbau und den Abbau der Verbindung, die sich alle - mit Ausnahme der Phase c - auf die Qualifikationsbedingung für den Datenservice im Zulassungszustand beziehen:
a) Definition der einzelnen Verbindungsphase, für den Aufbau der Verbindung, **durch** die Sequenz der Signalisierungen: Verbindungsanforderung und Verbindung;
b) Definition der einzelnen Abtrennungsphase, für den Abbau der Verbindung als Folge der Fehlenden Empfangsbestätigung der Bandsignalisierung auf dem Mobilfunkweg oder als Folge von Übertragungsfehlern auf dem besagten Mobilfunkweg, **durch** die Sequenz der Signalisierungen: Abtrennung mit Replik und Replik der Abtrennung;
c) Definition der isolierten Verbindungsphase, für tragbare PC, die an Mobilfunkterminals angeschlossen sind, die nicht für den Datenservice qualifiziert sind oder die für besagten Datenservice im Nicht - Zulassungszustand qualifiziert sind, **durch** die Sequenz der Signalisierungen: Verbindungsanforderung und Abtrennung ohne Replik;
d) Definition der isolierten Abtrennungsphase, für den Abbau der Verbindung als Folge der fehlenden Empfangsbestätigung der Signalisierung: Verbindung mit Initialisierung auf dem Mobilfunkweg, lediglich **durch** die Signalisierung: Abtrennung ohne Replik;
e) Definition der externen Verbindungs - internen Abtrennungsphase, für die Umleitung der Verbindung, **durch** die Sequenz der Signalisierungen: Verbindungsanforderung, Abtrennung mit Replik, Replik der Abtrennung und Verbindung.

7. Datakommunikationssystem gemäss einem beliebigen der vorhergehenden Ansprüche, **gekennzeichnet durch** die Festsetzung der Sessionen, die nicht initialisiert werden müssen, auf der Grundlage des Ausschlusses der folgenden Sessionen:
a) in der DIU in einzelner Abtrennungsphase oder bei Nicht - Vorhandensein des SVC, Ausschluss der Sessionen, die den vom tragbaren PC angeforderten Bändern entsprechen;
b) in der DIU in einzelner Abtrennungsphase, Ausschluss der Sessionen, die den Bändern mit der Bandsignalisierung in der transmission - trunking - Warteschlange entsprechen;
c) in der DIU bei Vorhandensein des SVC während der Aufhebung aufgrund des Ergebnisses der Verbindung, Ausschluss der Sessionen die den Bändern entsprechen, die in der Warteschlange der Übertragungsreihen des IM-D aufgehoben sind, wenn besagte Aufhebung als Folge einer fehlenden Empfangbestätigung der Signalisierung: Verbindung mit Initialisierung auf dem Mobilfunkweg endet;
d) in der RIU in einzelner Abtrennungsphase, Ausschluss der dem ersten Band mit übertragenen Bandsignalisierung entsprechenden Session, mit Empfangbestätigung der besagten Signalisierung auf dem Mobilfunkweg;
e) in der RIU in einzelner Abtrennungsphase, Ausschluss der Sessionen, die dem ersten Band mit Bandsignalisierung entsprechen, die noch nicht übertragen ist oder übertragen ist mit fehlender Empfangsbestätigung der besagten Signalisierung auf dem Mobilfunkweg, sowie auch der Sessionen, die den dem ersten Band folgenden Bändern entsprechen, auf der Grundlage des Kriteriums des vom tragbaren PC angeforderten Bandes.

8. Datakommunikationssystem gemäss einem beliebigen der vorhergehenden Ansprüche, **gekennzeichnet durch** die Auslösungen von Bändern, die den Sessionen entsprechen, die nicht initialisiert werden müssen, nach den folgenden Punkten:
a) **durch** die Einführung, mit dem Ziel der Unterscheidung zwischen dem vom tragbaren PC angeforderten Band und dem von den Computersystemen angeforderten Band, des Kriteriums der mit der Signalisierung:
Übertragungsanforderung zusammengefügten beziehungsweise nicht zusammengefügten Bandsignalisierung im IM-R und in der RIU;
b) **durch** die darauf folgende Verarbeitung in der RIU der Empfangbestätigung der Bandsignalisierung auf dem Mobilfunkweg: mit Eliminierung der Maskierungsmarke von der Signalisierung: Übertragungsanforderung im Fall der vom tragbaren PC angeforderten Bandes, und mit Übertragung an die DIU der Signalisierung: Bandbestätigung im Fall eines von den Computersystemen angeforderten Bandes;
c) **durch** die Wiederherstellung der Übertragungsfehler vom IM-R zum Funk - PC, die sich auf den nicht angemahnten Outbound - Datenflüssen ereignen, anhand einer zeitlich begrenzten Speicherung in einem Wiederherstellungspuffer der Outbound - Datenflüsse, die innerhalb der Bänder übertragen werden, die den für die Computersysteme festgelegten Sessionen zugeschrieben sind, und in diesem Fall:
d) anhand einer neuen Verbindung, die die Übertragung der in dem Wiederherstellungspuffer gespeicherten Datenflüsse ab dem Punkt festsetzt, an dem der Übertragungsfehler sich ereignet hat, wobei die Bandsignalisierung hinzugefügt wird, falls diese Signalisierung in der besagten Übertragung nicht eingeschlossen ist.

9. Datakommunikationssystem gemäss einem beliebigen der vorhergehenden Ansprüche, **gekennzeichnet durch** die folgenden Verarbeitungen der sich auf das Band beziehenden Informationen, Signalisierungen und Daten:
A) FÜR DIE INB INFORMATIONEN
a) Verarbeitung im tragbaren PC der Inputtasten und der Systemanforderungstaste mit den Signalisierungen: Sendung und Übergabe;
b) Verarbeitung im tragbaren PC der Eingabetaste und der Aufmerksamkeitstaste mit der Signalisierung: Zustellung;
c) Verarbeitung im tragbaren PC des Extensions - Präsentationsraumes zusätzlich zum Arbeits - Präsentationsraum;
d) Aufhebung des sich auf den Extensions - Präsentationsraum beziehenden Kontextes im Fall eines von den Computersystemen angeforderten Bandes, das vom tragbaren PC nach der Sendung und vor dem Kontakt empfangen wird und seine Wiedereinrichtung am Ende des besagten Bandes;
e) Verarbeitung des Sendung wie im Kapitel 7 angegeben hinsichtlich: Nicht - Vorhandensein eines Bandes, Vorhandensein eines Bandes in der Bedingung der Übertragungen in eine Richtung, Block, und Vorhandensein eines Bandes in der Bedingung der Übertragungen in beide Richtungen, Freigabe;
f) Verarbeitung des Inbound - Datenflusses und der Inbound - E-Mail Mitteilungen, wie in Kapitel 7 angegeben;
B) FÜR DIE OUTB INFORMATIONEN
a) Verarbeitung des Outbound - Datenflusses, und der Öffnung der Arbeitsession, wie in Kapitel 7 angegeben hinsichtlich:
Nicht - Vorhandensein eines Bandes, Vorhandensein eines Bandes in der Bedingung der Übertragungen in eine Richtung, Block, und Vorhandensein eines Bandes in der Bedingung der Übertragungen in beide Richtungen, Freigabe;
b) Verarbeitung der Signalisierungen: Abkoppelung und Loslösung und Hinzufügung zwischen diese Signalisierungen von eventuellen Outbound - E-Mail - Mitteilungen, wie in Kapitel 7 angegeben;
c) Verarbeitung des Schliessens der Arbeitssession, wie in Kapitel 7 angegeben.

10. Datakommunikationssystem gemäss einem beliebigen der vorhergehenden Ansprüche, **gekennzeichnet durch** die im folgenden angezeigten Übereinstimmungen zwischen den Signalisierungen, die sich auf die Verbindungs- oder Bandprozeduren beziehen und den X.25 Paketen, die den SVC auf- und abbauen, wo der Bezug zur Schnittstelle X.25 die Benutzung eines Transportnetzwerkes vom Typ IP zwischen dem Kommunikationsserver und dem Funknetzwerk - Controller / separate Hardware - Einheit ermöglicht und das System mit dem Standard GPRS des GSM - Netzwerkes perfekt gleichförmig macht:
A) VERSION, DIE DEM DATENNETZWERK GEGENÜBER TRANSPARENT IST, mit der folgenden Übereinstimmung zwischen den Signalisierungen, die sich auf die Verbindungsprozeduren beziehen und den X.25 Paketen, die den SVC auf- und abbauen:
Verbindungsanforderung = call request auf der Funkschnittstelle
= incoming call auf der Datenschnittstelle;
Replik der Abtrennung = clear request auf der Funkschnittstelle
= clear indication auf der Datenschnittstelle;
Verbindung = call accepted auf der Datenschnittstelle
= call connected auf der Funkschnittstelle;
Abtrennung ohne Replik = clear request auf der Datenschnittstelle
= clear indication auf der Funkschnittstelle;
wo Datenschnittstelle die Schnittstelle zwischen dem Kommunikationsserver und dem Knoten des Datennetzwerkes bezeichnet, und Funkschnittstelle die Schnittstelle zwischen dem Funknetzwerk - Controller und dem Knoten des Datennetzwerkes bezeichnet;
B) VERSION, DIE DER FUNKMASCHE GEGENÜBER TRANSPARENT IST, mit der folgenden Übereinstimmung zwischen den Signalisierungen, die sich auf die Bandprozeduren beziehen, und den X.25 Paketen, die den SVC auf- und abbauen, auf der Schnittstelle zwischen der separaten Hardware - Einheit und dem BSC / tragbare PC - Mobilfunkterminal:
Verbindungsanforderung, Sendung, Zustellung, Unterbrechung und Ende der Unterbrechung= call request;
Replik auf call request = clear indication, was gegebenenfalls dem Verbindungsrückruf oder der Verbindung, mit oder ohne Initialisierung, entspricht;
Band = incoming call;
Replik auf incoming call = call accepted, im Falle von Empfangsbestätigung des Bandes
= clear request, im Falle der fehlenden Empfangsbestätigung des Bandes;
Loslösung = clear indication;
Replik auf clear indication = clear request, im Falle der fehlenden Empfangsbestätigung der Signalisierung;
darüber hinaus wird das clear indication bei Empfang der Abtrennung mit Replik übertragen, wenn ein sich in Durchführung befindliches Band für den implizierten Funk - PC existiert;
schliesslich stimmt die Schnittstelle zwischen der separaten Hardware - Einheit und dem Knoten des GPRS - backbone - Datennetzwerkes mit der Funkschnittstelle der dem besagten Datennetzwerk gegenüber transparenten Version überein.

## Claims

1. Data communication system on public digital mobile radio networks, as for instance the GSM network, in which the radio network controller corresponds to the Mobile Switching Center, MSC, while the radio base station corresponds to the Base Station System, BSS, composed of the whole of the Base Station Controller, BSC, and of the Base Transceiver Station, BTS, and in which the whole of the PC radio and of the mobile radio set corresponds to the Mobile Station, MS;
the system is suitable to enable the integration of a portable PC connected to the mobile radio terminal with the network architectures for both centralized computer systems, for instance those of IBM and Bull, and distributed computer systems, for instance those on TCP/IP, for Internet access, and client-server architectures, as well as with the network architectures for electronic mail systems;
the system is also **characterized by** the fact that it is specified on the basis of the description of the procedures carried out by its constituting elements, and by the description of the interfaces between these same elements;
moreover the system is suitable to visualize, on the display of the portable PC, the times in which the operator may power off the mobile radio terminal, as well as the times in which he may power off said PC or disconnect it from the mobile radio terminal or also make it operate in stand-alone mode, with the assurance during these conditions of permanently maintaining the sessions established with the centralized computer systems with concentrator-based access;
finally, the system is suitable to allow the recovery of the transmissions of the unsolicited outbound data flows which are interrupted without the knowledge of the operator when a transmission error occurs on the mobile radio path while the portable PC, as well as the mobile radio terminal, is powered on, it is connected to said mobile radio terminal and it is not operating in stand-alone mode, by means of a recovery procedure using a time-limited buffering of the outbound data flows of the computer systems.

2. Data communication system, as according to the first claim, **characterized by** its constituting elements, some internal and others external to the infrastructure, which is constituted by the mobile radio network and by the packet switching or frame relay data network, interconnected to each other; the configuration of the elements in question is determined with reference to a version of said system not transparent to the data network and to two versions transparent to the data network and to the radio mesh, defined below:
A) VERSION NOT TRANSPARENT TO THE DATA NETWORK, used to specify the procedures carried out by the elements that constitute the system and the interfaces between said elements, in which the elements internal to the infrastructure are the following:
*) Radio Interworking Unit, RIU, integrated in the radio network controller linked to the node of the fixed data network that integrates the RIU side Interface Manager, and constituted by a specific software module resident on the communication board in said radio network controller, which implements the procedures of this element;
*) RIU-side Interface Manager, IM-R, integrated in the node of the fixed data network linked to the radio network controller, and constituted by a specific software module resident on the communication board in said data network node, which implements the procedures of this element;
*) DIU-side Interface Manager, IM-D, integrated in the node of the fixed data network predisposed for linking to the Data Interworking Unit, and constituted by a specific software module resident on the communication board in said data network node, which implements the procedures of this element;
and in which the elements external to the infrastructure are the following:
*) PC radio, constituted by a portable PC predisposed for linking to the mobile radio set and by a specific software module resident in said portable PC, which implements the procedures of this element;
*) Mobile radio set, constituted by a mobile radio terminal predisposed for linking to the PC radio, and by a specific software module resident on the board of said mobile radio terminal, which implements the procedures of this element;
*) Data Interworking Unit, DIU, in the subscriber's premises, constituted by a communication server predisposed for linking to the node of the fixed data network that integrates the DIU-side Interface Manager, and by a specific software module resident in said communication server, which implements the procedures of this element; in order to enable the Data Interworking Unit to interface the system to the network architectures, the communication server is predisposed for LAN-type links, for instance Token Ring, Ethernet, and for WAN-type links, for instance SDLC, QLLC, HDLC, X.25, as requested by the interfaced network architectures;
B) VERSION TRANSPARENT TO THE DATA NETWORK, in the case of public digital mobile radio networks with integrated voice and data services, derived from the version not transparent to said network by relocating the Interface Managers, IM-D and IM-R, from the nodes of said network respectively into the communication server and into the radio network controller, and combining the IM-D with the DIU and the IM-R with the RIU;
C) VERSION TRANSPARENT TO THE RADIO MESH, in the case of public digital mobile radio networks only conceived for radiotelephony, derived from the version transparent to the data network by relocating the combined software elements IM-R and RIU from the radio network controller into a separate hardware unit linked, in the case of the GSM network, to the node of the GPRS backbone data network and to the Base Station Controllers BSC, bypassing said radio network controller MSC.

3. Data communication system, as according to the first two claims, **characterized by** the following interfaces between its constituting elements:
A) INTERFACE BETWEEN THE DIU AND THE PC RADIOMOBILE RADIO SET, defined by the following signallings exchanged between the two elements: INB-CONN Connection request, OUTB-CS-CONN Connection with initialization, OUTB-CS-CONN Connection without initialization, INB-IMP Forward, OUTB-AS-IMP Transfer, INB-IMP Delivery, OUTB-CS-IMP Bond, OUTB-AS-IMP Contact, OUTB-AS-IMP Release, OUTB-AS-IMP Detach;
B) INTERFACE BETWEEN THE DIU AND THE RIU, defined by the following signallings exchanged between the two elements: INB-CONN Removal, OUTB-CONN Disconnection with reply, OUTB-CONN Disconnection without reply, INB-CONN Disconnection reply, INB-CONN Initialization, INB-CONN Extraction, INB-IMP Bond confirmation;
C) INTERFACE BETWEEN THE RIU AND THE PC RADIOMOBILE RADIO SET, defined by the following signallings exchanged between the two elements: INB-CONN Interruption, INB-CONN End of interruption, INB-IMP Transmission request, OUTB-AS-IP Transmission, INB-IMP End of transmission, OUTB-CS-CONN Connection recall;
D) INTERFACE BETWEEN THE IM-R AND THE PC RADIOMOBILE RADIO SET, defined by the following signallings exchanged between the two elements: INB-CONN Connection request, OUTB-CS-CONN Connection without initialization, INB-IMP Forward, OUTB-CS-CONN Connection recall, INB-IMP Delivery;
E) INTERFACE BETWEEN THE IM-R AND THE RIU, defined by the following signallings exchanged between the two elements: OUTB-CONN Removal request, OUTB-IMP Transmission request, INB-IMP Transmission, OUTB-IMP End of transmission;
F) INTERFACE BETWEEN THE DIU AND THE IM-D, defined by the following signallings exchanged between the two elements: OUTB-IMP Transmission request, INB-IMP Transmission, OUTB-IMP End of transmission;
G) INTERFACE BETWEEN THE IM-D AND THE IM-R, defined by the signalling of OUTB-IMP End of data flow exchanged between the two elements;
where the acronyms INB and OUTB respectively indicate the transmission in the direction from the portable PC to the DIU, inbound, and the transmission in the opposite direction, outbound; the acronyms AS and CS respectively establish, as regards the transmissions on the mobile radio path, whether the signalling is an associated signalling or a common signalling;
and the acronyms CONN and IMP state if the signalling refers respectively to the connection procedures or to the bond procedures.

4. Data communication system as according to any of the previous claims, characterized, as regards the logical links and the data structures, by the following points:
a) by a single logical link, named connection, on the data network for all of the sessions, and by a logical link, named bond, on the mobile radio network for each work unit of every session;
b) by the subdivision of the bond in two parts, one internal delimited by the contact and by the detach, which allows two-way inbound and outbound transmissions, and one external delimited from one side by the bond and by the contact and from the other side by the detach and by the release, which allows only one-way outbound transmissions;
c) by the introduction, in order to distinguish between bond requested by the portable PC and bond requested by the computer systems, of the criterion of bond respectively contextual or not contextual with the contact on the data network and of the criterion of contact respectively joined or not joined with the transfer on the mobile radio path;
d) by the manner of transmitting the bonds from the DIU to the RIU which avoids the overtaking of a bond requested by the portable PC on the part of a bond which may be requested by the computer system of the same session;
e) by the inclusion of the work units requested by electronic mail systems in the bonds relative to the work units requested by the portable PC or by the computer systems;
f) by means of the constitution in the IM-D of the connection records, and the introduction of the suspension mark which may check said connection records;
by means of the constitution in the RIU of the connection cards with the bond records, and the introduction of the removal for suppression and removal for repetition marks, of the extraction mark and of the interruption mark which may check said connection cards;
by means of the attribution to two different software modules, the DIU and the IM-D from one side and the IM-R and the RIU from the other side, respectively of the transmission trunking queue and of the scheduling queues;
by means of the introduction of the masking mark which may check the signallings in the scheduling queues in the IM-D and in the RIU and in the transmission queues of the control channels in the RIU;
by means of the separation between the signalling transmission queue and the data transmission queue in the DIU, in the IM-D, in the IM-R and in the RIU, the first queue having priority of service with respect to the second.

5. Data communication system as according to any of the previous claims, **characterized by** the replies or by the actions as stated below, in the case of the signallings dispatched by the portable PC:
a) connection solicitation or no reply, respectively in the case of forward or of delivery received by the IM-R in lack of switched virtual circuit, SVC;
b) connection solicitation or transmission to the DIU of removal, in the case of transmission request received by the RIU respectively in lack or in presence of SVC, in the second case without correspondence of TDMA frame between the control channel and the data channel;
c) connection without initialization or transmission to the IM-D of the signaling itself, in the case of connection request, respectively without or with the enable/disable password, received by the IM-R in presence of SVC;
d) disconnection with reply or no reply, in the case of connection request with the enable/disable password for the disabling command received by the DIU in the enabling state, respectively in presence or in lack of SVC, in the first case after suspension for the result of the connection;
e) disconnection with reply or connection, in the case of connection request without the enable/disable password received by the DIU in the enabling state, respectively in presence or in lack of SVC, in the first case after suspension for the result of the connection;
f) connection or disconnection without reply, in the case of disconnection reply, as well as no reply or disconnection without reply, in the case of initialization, both signallings received by the DIU in presence of SVC during suspension for the result of the connection, respectively in the enabling state or in the disabling state.

6. Data communication system, as according to any of the previous claims, **characterized by** the definition of the phases of setting up and clearing the connection as stated below, all - except phase c - relative to the condition of qualification to the data service in the enabling state:
a) definition of the single connection phase, to set up the connection, by means of the sequence of the connection request and connection signallings;
b) definition of the single disconnection phase, to clear the connection following the lacking ACK of the bond signalling on the mobile radio path or following transmission errors on said mobile radio path, by means of the sequence of the disconnection with reply and disconnection reply signalling;
c) definition of the isolated connection phase, for portable PC's connected to mobile radio terminals not qualified to the data service or qualified to said data service in the disabling state, by means of the sequence of the connection request and disconnection without reply signallings;
d) definition of the isolated disconnection phase to clear the connection following the lacking ACK of the connection with initialization signalling on the mobile radio path, by means of the sole disconnection without reply signalling;
e) definition of the external connection - internal disconnection phase, for re-routing the connection, by means of the sequence of the connection request, disconnection with reply, disconnection reply and connection signallings.

7. Data communication system, as according to any of the previous claims, **characterized by** the determination of the sessions which do not need to be initialized, on the basis of the exclusion of the following sessions:
a) in the DIU in single disconnection phase or in absence of SVC, exclusion of the sessions corresponding to the bonds requested by the portable PC;
b) in the DIU in single disconnection phase, exclusion of the sessions corresponding to the bonds with bond signalling in the transmission trunking queue;
c) in the DIU in presence of SVC during suspension for the result of the connection, exclusion of the sessions corresponding to the bonds suspended in the scheduling queue of the IM-D, when said suspension ends following the lacking ACK of the connection with initialization signalling on the mobile radio path;
d) in the RIU in single disconnection phase, exclusion of the session corresponding to the first bond with bond signalling transmitted and with ACK of said signalling on the mobile radio path;
e) in the RIU in single disconnection phase, exclusion of the sessions corresponding to the first bond with bond signalling not yet transmitted or transmitted and with lacking ACK of said signalling on the mobile radio path, as well as to the bonds subsequent to the first one, on the basis of the criterion of bond requested by the portable PC.

8. Data communication system, as according to any of the previous claims, **characterized by** the triggers of the bonds corresponding to the sessions which do not need to be initialized, according to the following points:
a) by means of the introduction, in order to distinguish between bond requested by the portable PC and bond requested by the computer systems, of the criterion of bond signalling respectively joined or not joined with the transmission request signalling in the IM-R and in the RIU;
b) by means of the following processing in the RIU of the ACK of the bond signalling on the mobile radio path: with elimination of the masking mark from the transmission request signalling in the case of bond requested by the portable PC, and with transmission to the DIU of the bond confirmation signalling in the case of bond requested by the computer systems;
c) by means of the recovery of the transmission errors from the IM-R to the PC radio which occur on the unsolicited outbound data flows, through the storage for a limited time in a recovery buffer of the outbound data flows transmitted within the bonds assigned to the sessions established for the computer systems; and in this case:
d) through a new connection which determines the transmission of the data flow stored in the recovery buffer starting from the point in which the transmission error had occurred, adding the bond signalling in the case that this signalling were not included in the transmission in question.

9. Data communication system, as according to any of the previous claims, **characterized by** the following processing of the information relative to the bond, signallings and data:
A) FOR THE INBOUND INFORMATION:
a) processing in the portable PC of the input keys and of the system request key with the forward and transfer signallings;
b) processing in the portable PC of the enter key and of the attention key with the delivery signalling;
c) processing in the portable PC of the extension presentation space added to the working presentation spaces;
d) suspension of the context relative to the extension presentation space in the case of bond requested by the computer systems received by the portable PC after the forward and before the contact and its restoration at the end of the same bond;
e) processing of the forward as stated in chapter 7 in terms of: lack of bond, presence of bond in condition of one-way transmission, block, and presence of bond in condition of two-way transmission, unblock;
f) processing of the inbound data flow and of the electronic mail inbound messages, as stated in chapter 7;
B) FOR THE OUTBOUND INFORMATION:
a) processing of the outbound data flow and of the work session bind as stated in chapter 7 in terms of: lack of bond, presence of bond in condition of one-way transmission, block, and presence of bond in condition of two-way transmission, unblock;
b) processing of the detach and release signallings, and insertion between these signallings of the electronic mail outbound messages, if any, as stated in chapter 7;
c) processing of the work session unbind, as stated in chapter 7.

10. Data communication system, as according to any of the previous claims, **characterized by** the following correspondences between the signallings relative to the connection or bond procedures and the X.25 packets that set up and clear the SVC, where the reference to the X.25 interface allows the use of an IP-type transport network between the communication server and the radio network controller/separate hardware unit, and makes the system conform perfectly to the GPRS standard of the GSM network:
A) VERSION TRANSPARENT TO THE DATA NETWORK, with the following correspondence between the signallings relative to the connection procedures and the X.25 packets that set up and clear the SVC:
Connection request = call request on the radio interface
= incoming call on the data interface;
Disconnection reply = clear request on the radio interface
= clear indication on the data interface;
Connection = call accepted on the data interface
= call connected on the radio interface;
Disconnection without reply = clear request on the data interface
= clear indication on the radio interface;
where data interface designate that interface between the communication server and the data network node, and radio interface designate that interface between the radio network controller and the data network node;
B) VERSION TRANSPARENT TO THE RADIO MESH, with the following correspondence between the signallings relative to the bond procedures and the X.25 packets that set up and clear the SVC, on the interface between the separate hardware unit and the BSC/portable PC-mobile radio terminal:
Connection request, forward, delivery, interruption and end of interruption = call request;
Reply to the call request = clear indication, corresponding, when the case arises, to the connection solicitation or to the connection, with or without initialization;
Bond = incoming call;
Reply to the incoming call = call accepted, in the case of ACK of the bond
= clear request, in the case of lacking ACK of the bond;
Release = clear indication;
Reply to the clear indication = clear request, in the case of lacking ACK of the signalling;
moreover the clear indication is transmitted upon receipt of the disconnection with reply, when there is a bond in course of effect for the involved PC radio;
finally, the interface between the separate hardware unit and the node of the GPRS backbone data network coincides with the radio interface of the version transparent to said data network.
